(19) Europäisches Patentamt
European Patent Office
Office européen des brevets

(11) **EP 4 676 031 A1**

(12) **EUROPEAN PATENT APPLICATION**

(43) Date of publication:
**07.01.2026 Bulletin 2026/02**

(21) Application number: **24306079.5**

(22) Date of filing: **02.07.2024**

(51) International Patent Classification (IPC):
***H04N 19/105*** (2014.01) ***H04N 19/11*** (2014.01)
***H04N 19/12*** (2014.01) ***H04N 19/14*** (2014.01)
***H04N 19/159*** (2014.01) ***H04N 19/176*** (2014.01)
***H04N 19/593*** (2014.01)

(52) Cooperative Patent Classification (CPC):
**H04N 19/11; H04N 19/105; H04N 19/12; H04N 19/14; H04N 19/159; H04N 19/176; H04N 19/593**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
- **PURI, Saurabh
SAINT-LAZARE, J7T 0P6 (CA)**
- **BONNINEAU, Charles
MONTREAL, H2J 1G1 (CA)**
- **NASER, Karam
35250 MOUAZE (FR)**
- **LE LEANNEC, Fabrice
35830 BETTON (FR)**

(74) Representative: **Vossius & Partner
Patentanwälte Rechtsanwälte mbB
Siebertstraße 3
81675 München (DE)**

# (54) MULTIPLE TRANSFORM SET SELECTION FOR FUSION BASED INTRA MODES

(57) Systems, devices, and methods are described herein for multiple transform set selection for fusion based intra modes. An example device may determine that a fusion of a plurality of prediction blocks is to be used to predict a video block. The device may determine a prediction block of the plurality of prediction blocks using a prediction mode. The device may determine a histogram of gradients (HoG) based on the prediction block, for example, before the fusion of the plurality of prediction blocks. The device may determine a virtual intra prediction mode (VIPM) based on the HoG. The device may determine a transform set based on the VIPM. The device may decode the video block using one of a plurality of transform sets, wherein the plurality of transform sets comprises the determined transform set.

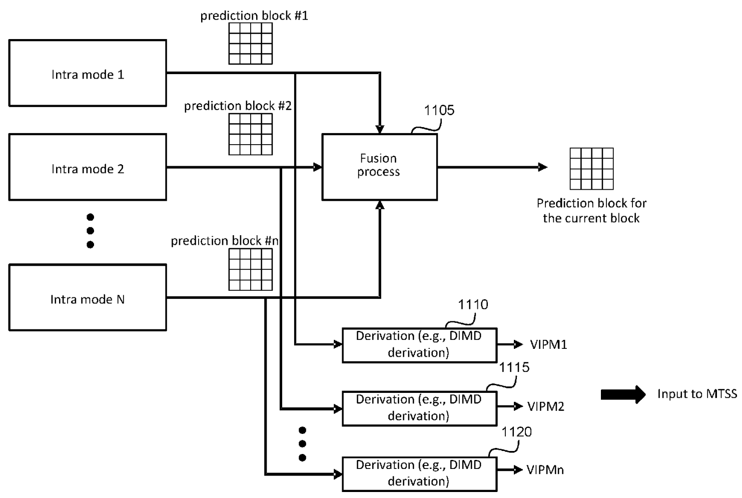


FIG. 11

EP 4 676 031 A1

## Description

## BACKGROUND

Video coding systems may be used to compress digital video signals, e.g., to reduce the storage and/or transmission bandwidth needed for such signals. Video coding systems may include, for example, block-based, wavelet-based, and/or object-based systems.

## SUMMARY

Systems, devices, and methods are described herein for cross component residual prediction. An example device (e.g., for video decoding) may determine that a fusion of a plurality of prediction blocks is to be used to predict a video block. The device may determine a prediction block of the plurality of prediction blocks using a prediction mode. Before the fusion of the plurality of prediction blocks, the device may determine a histogram of gradients (HoG) based on the prediction block. The device may determine a virtual intra prediction mode (VIPM) based on the HoG. The device may determine a transform set based on the VIPM. The device may decode the video block using one of a plurality of transform sets. The plurality of transform sets may include the determined transform set.

An example device (e.g., for video encoding) may determine that a fusion of a plurality of prediction blocks is to be used to predict a video block. The device may determine a prediction block of the plurality of prediction blocks using a prediction mode. The device may determine a histogram of gradients (HoG) based on the prediction block, for example, before the fusion of the plurality of prediction blocks. The device may determine a virtual intra prediction mode (VIPM) based on the HoG. The device may determine a transform set based on the VIPM. The device may encode the video block using one of a plurality of transform sets. The plurality of transform sets may include the determined transform set.

The determined transform set may be a first candidate transform set of a plurality of candidate transform sets. The HoG may be a first HoG. The prediction block may be a first prediction block of the plurality of prediction blocks. The VIPM may be a first VIPM. The device may determine a second HoG based on a second prediction block of the plurality of prediction blocks. The device may determine a second VIPM based on the second HoG. The device may determine a second candidate transform set based on the second VIPM.

The device may select two or more prediction modes from a plurality of prediction modes based on a template cost associated with a prediction mode of the plurality of prediction modes. The prediction block may be determined based on a first prediction mode of the selected two or more prediction modes.

The first prediction mode may have a lowest template cost among the plurality of prediction modes. A second prediction mode of the selected two or more prediction modes may have a second lowest template cost among the plurality of prediction modes.

The first prediction mode may use matrix weighted intra prediction (MIP). The second prediction mode may use MIP. The device may perform MIP prediction up-sampling after the fusion of the plurality of the prediction blocks.

The first and second prediction modes may use extrapolation filter-based intra prediction or intra template matching prediction (IntraTMP).

The prediction mode may be one of a plurality of prediction modes. The device may determine that the prediction mode uses a block vector (BV). Based on the determination that the prediction mode uses the BV, the device may select the prediction mode from the plurality of prediction modes for the determination of the HoG.

The determined transform set may be a first candidate transform set of two candidate transform sets. The HoG may be a first HoG. The prediction block may be a first prediction block. The device may determine that a fusion weight difference between a first fusion weight associated with the first prediction block and a second fusion weight associated with a second prediction block of the plurality of prediction blocks is less than a threshold. Based on the determination that the fusion weight difference is less than the threshold, the device may determine the first HoG based on the first fusion weight associated with the first prediction block and a second HoG based on the second fusion weight associated with the second prediction block.

The device may determine a template of the prediction block. The HoG may be determined using one or more samples in the template of the prediction block, for example, before the fusion of the plurality of prediction blocks. The device (e.g., the encoder) may select the first transform set. The device may perform transform based on the first transform set. The device may send (e.g., to a decoding device) an indication of the first transform set.

The device (e.g., the decoder) may receive an indication of a first transform set of the plurality of the transform sets. The device may select the first transform set based on the indication. The device may perform inverse transform of the video block based on the first transform set.

The fusion of the plurality of prediction blocks may be performed by a weighted averaging of the plurality of prediction blocks.

A method for video decoding may include determining that a fusion of a plurality of prediction blocks is to be used to predict a video block. The method may include determining a prediction block of the plurality of prediction blocks using a prediction mode. The method may include determining a histogram of gradients (HoG) based on the prediction block, for example, before the fusion of the plurality of prediction blocks. The method may include determining a virtual intra prediction mode (VIPM) based on the HoG. The method may include determining a transform set based on the VIPM. The method may include decoding the video block using one of a plurality of transform sets, wherein the plurality of transform sets comprises the determined transform set.

A method for video encoding may include determining that a fusion of a plurality of prediction blocks is to be used to predict a video block. The method may include determining a prediction block of the plurality of prediction blocks using a prediction mode. The method may include determining a histogram of gradients (HoG) based on the prediction block, for example, before the fusion of the plurality of prediction blocks. The method may include determining a virtual intra prediction mode (VIPM) based on the HoG. The method may include determining a transform set based on the VIPM. The method may include encoding the video block using one of a plurality of transform sets. The plurality of transform sets may include the determined transform set.

The determined transform set may be a first candidate transform set of a plurality of candidate transform sets. The HoG may be a first HoG. The prediction block may be a first prediction block of the plurality of prediction blocks. The VIPM may be a first VIPM. The method may include determining a second HoG based on a second prediction block of the plurality of prediction blocks. The method may include determining a second VIPM based on the second HoG. The method may include determining a second candidate transform set based on the second VIPM.

## BRIEF DESCRIPTION OF THE DRAWINGS

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 is a diagram showing an example block-based video encoder.

FIG. 3 is a diagram showing an example video decoder.

FIG. 4 is a diagram showing an example of a system in which various aspects and examples may be implemented.

FIG. 5 illustrates example of matrix weighted intra prediction (MIP).

FIG. 6 illustrates an example of using MIP prediction samples to build a histogram of gradients (HoG).

FIGs. 7A and 7B illustrate examples of decoder-side intra mode derivation (DIMD) in MIP-low frequency non-separable transform set derivation.

FIG. 8 illustrates example extrapolation filter-based intra prediction (EIP) filter shapes.

FIG. 9 illustrates examples of reconstructed areas for an EIP filter.

FIG. 10 illustrates an example intra template matching search area.

FIG. 11 illustrates an example of multiple transform set selection (MTSS) virtual intra prediction mode (VIPM) derivation with fusion modes.

FIG. 12 illustrates an example of MTSS VIPM derivation for a derived MIP mode

FIG. 13 illustrates an example of deriving MTSS from template-based intra mode derivation (TIMD) using a non-angular mode.

## DETAILED DESCRIPTION

A detailed description of illustrative embodiments will now be described with reference to the various Figures. Although this description provides a detailed example of possible implementations, it should be noted that the details are intended to be exemplary and in no way limit the scope of the application.

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as N R and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 160a, 160b, 160c in the RAN 104 via an S1 interface and may serve as a control node. For example, the MME 182 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11 af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may perform testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples or embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

The aspects described and contemplated in this application may be implemented in many different forms. FIGS. 5-13 described herein may provide some embodiments, but other embodiments are contemplated. The discussion of FIGS. 5-13 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

The terms HDR (high dynamic range) and SDR (standard dynamic range) may be used in this disclosure. Those terms often convey specific values of dynamic range to those of ordinary skill in the art. However, additional embodiments are also intended in which a reference to HDR is understood to mean "higher dynamic range" and a reference to SDR is understood to mean "lower dynamic range." Such additional embodiments are not constrained by any specific values of dynamic range that might often be associated with the terms "high dynamic range" and "standard dynamic range."

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application may be used to modify modules, for example, in-loop filters modules (265 and 365), of a video encoder 200 and decoder 300 as shown in FIG. 2 and FIG. 3, respectively. Moreover, the subject matter disclosed herein presents aspects that are not limited to VVC or HEVC, and may be applied, for example, to any type, format or version of video coding, whether described in a standard or a recommendation, whether pre-existing or future-developed, and extensions of any such standards and recommendations (e.g., including VVC and HEVC). Unless indicated otherwise, or technically precluded, the aspects described in this application may be used individually or in combination.

Various numeric values are used in examples described in the present application, such as coefficients, filter sizes, etc. These and other specific values are for purposes of describing examples and the aspects described are not limited to these specific values.

FIG. 2 is a diagram showing an example video encoder (e.g., an example block-based hybrid video encoder) 200. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

FIG. 3 is a diagram showing an example of a video decoder 300. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380). For a given picture, the contents of the reference picture buffer 380 on the decoder 300 side may be identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

FIG. 4 is a diagram showing an example of a system in which various aspects and embodiments described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various embodiments, the system 400 is communicatively coupled to one or more other systems, or other electronic devices, via, for example, a communications bus or through dedicated input and/or output ports. In various embodiments, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various embodiments, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 410 and/or the encoder/decoder module 430 is used to store instructions and to provide working memory for processing that is needed during encoding or decoding. In other embodiments, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as, for example, MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various embodiments, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down-converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the data stream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various embodiments, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these embodiments is typically connected to an access point or router that provides access to external networks including the Internet for allowing streaming applications and other over-the-top communications. Other embodiments provide streamed data to the system 400 using a set-top box that delivers the data over the HDMI connection of the input block 445. Still other embodiments provide streamed data to the system 400 using the RF connection of the input block 445. As indicated above, various embodiments provide data in a non-streaming manner. Additionally, various embodiments use wireless networks other than Wi-Fi, for example a cellular network or a Bluetooth network.

The system 400 can provide an output signal to various output devices, including a display 475, speakers 485, and other peripheral devices 495. The display 475 of various embodiments includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples of embodiments, one or more of a stand-alone digital video disc (or digital versatile disc) (DVR, for both terms), a disk player, a stereo system, and/or a lighting system. Various embodiments use one or more peripheral devices 495 that provide a function based on the output of the system 400. For example, a disk player performs the function of playing the output of the system 400.

In various embodiments, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various embodiments, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various embodiments in which the display 475 and speakers 485 are external components, the output signal may be provided via dedicated output connections, including, for example, HDMI ports, USB ports, or COMP outputs.

The embodiments may be carried out by computer software implemented by the processor 410 or by hardware, or by a combination of hardware and software. As a non-limiting example, the embodiments may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, determining that a fusion of a plurality of prediction blocks is to be used to predict a video block; determining a prediction block of the plurality of prediction blocks using a prediction mode; determining a histogram of gradients (HoG) based on the prediction block, for example, before the fusion of the plurality of prediction blocks; determining a virtual intra prediction mode (VIPM) based on the HoG; determining a transform set based on the VIPM; and decoding the video block using one of a plurality of transform sets, wherein the plurality of transform sets comprises the determined transform set, etc.

As further embodiments, in one example "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, determining that a fusion of a plurality of prediction blocks is to be used to predict a video block; determining a prediction block of the plurality of prediction blocks using a prediction mode; determining a histogram of gradients (HoG) based on the prediction block, for example, before the fusion of the plurality of prediction blocks; determining a virtual intra prediction mode (VIPM) based on the HoG; determining a transform set based on the VIPM; and encoding the video block using one of a plurality of transform sets, wherein the plurality of transform sets comprises the determined transform set, etc.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment," "an embodiment," "an example," "one implementation" or "an implementation," as well as other variations thereof, means that a particular feature, structure, characteristic, and so forth described in connection with the embodiment is included in at least one embodiment. Thus, the appearances of the phrase "in one embodiment," "in an embodiment," "in an example," "in one implementation," or "in an implementation", as well any other variations, appearing in various places throughout this application are not necessarily all referring to the same embodiment or example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in some embodiments the encoder signals (e.g., to a decoder) a size index of a filter or set of filters, etc. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various embodiments. It is to be appreciated that signaling may be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

Many embodiments are described herein. Features of embodiments may be provided alone or in any combination, across various claim categories and types. Further, embodiments may include one or more of the features, devices, or aspects described herein, alone or in any combination, across various claim categories and types . For example, features described herein can be implemented in a bitstream or signal that includes information generated as described herein. The information can allow a decoder to decode a bitstream, the encoder, bitstream, and/or decoder according to any of the embodiments described. For example, features described herein can be implemented by creating and/or transmitting and/or receiving and/or decoding a bitstream or signal. For example, features described herein can be implemented a method, process, apparatus, medium storing instructions, medium storing data, or signal. For example, features described herein can be implemented by a TV, set-top box, cell phone, tablet, or other electronic device that performs decoding. The TV, set-top box, cell phone, tablet, or other electronic device can display (e.g., using a monitor, screen, or other type of display) a resulting image (e.g., an image from residual reconstruction of the video bitstream). The TV, set-top box, cell phone, tablet, or other electronic device can receive a signal including an encoded image and perform decoding.

A transform may be selected based on the intra prediction mode of the current block (e.g., for intra multiple transform selection (MTS) and low frequency non-separable transform/non-separable primary transform (LFNST/NSPT). The intra prediction may be used as input to a lookup table (LUT) (e.g., to get a suitable transform set for the block). This may utilize the correlation between the directional intra modes and residuals type (e.g., because residual samples may have larger absolute values if they are far away from the reference samples).

Techniques for deducing the intra mode for non-directional modes (e.g., MIP, DIMD, TIMD, SGPM, EIP, IntraTMP, IBC, inter blocks, etc.) are provided herein. For example, the DIMD mode may be used to derive a virtual intra prediction mode (VIPM) for these (e.g., non-directional) modes. A VIPM may be used to determine a transform set if a prediction mode (e.g., MIP, DIMD, TIMD, SGPM, EIP, IntraTMP, IBC, inter blocks) is used for a prediction of the current video block. In some examples, the VIPM may not help in selecting a (e.g., the best) transform set (e.g., because the VIPM does not reflect the type of residual for non-angular blocks).

Feature(s) described herein may improve the performance of VIPM derivation. For example, multiple transform set selection (MTSS) may be used. In MTSS, a (e.g., an additional) transform set may be tested (e.g., in addition to the initial one) for modes relying on VIPM for LFNST/NSPT. The LFNST/NSPT kernels from the alternative transform set and the initial transform sets may be tested. The selected transform set and the index of the LFNST/NSPT kernel in the set may be signaled to the decoder. This approach may be used for intra MTS (e.g., because a similar mechanism based on an LUT is used for primary transform pair selection).

In MTSS, the initial transform set and the alternative transform set may be selected based on the type of mode. For DIMD, the first and second transform set may be derived using the DIMD process on the neighboring samples. For MIP mode, the first and second transform set may be derived using the DIMD process on the down-sampled prediction samples (e.g., obtained after the MIP matrix multiplication). For SGPM, the (e.g., two) IPMs that SGPM uses may be used to derive the second (e.g., alternative) candidate transform set. The difference between the first and second IPM may be larger than four (e.g., to keep the diversity).

One or more intra mode(s) may use a fusion process (e.g., to improve the prediction accuracy). For example, two or more prediction modes (e.g., with minimum template cost) may be derived and fused together. For example, if a TIMD coded block applies fusion, the SATD cost between the prediction and reconstruction samples of the template may be used to determine one or more (e.g., two) IPMs (e.g., with minimum SATD) and a (e.g., one) non-angular intra prediction mode (e.g., DC, planar, or BV-based like IBC or IntraTMP). The (e.g., three) modes may be fused (e.g., using weight(s)). If a TIMD coded block applies fusion, the second TIMD IPM may be used to derive the second (e.g., alternative) candidate transform set.

The second (e.g., alternative) MTSS may be derived from the TIMD fusion process. Other fusion modes may not use TIMD fusion to derive the second (e.g., alternative) MTSS. Fusion mode(s) (e.g., derived MIP mode) may be improved to achieve better RD performance during the MTSS selection. Feature(s) described herein may improve the RD performance offered by MTSS tool(s) (e.g., by improving the MTSS set selection if fusion modes are used).

Multiple transform set selection (MTSS) may be performed for LFNST/NSPT. The LFNST/NSPT transform set may be decided (e.g., implicitly decided) by an intra prediction mode (IPM). For a block coded with PLANAR, DC or directional modes, the IPM may, for example, be set as the intra prediction mode itself. For a DIMD coded block, the IPM may, for example, be set as the best mode derived by the DIMD process with neighboring reconstructed pixels. For a TIMD coded block, the IPM may, for example, be set as the best mode derived by the TIMD process. For a MIP or ITMP coded block, the IPM may, for example, be set as the best mode derived by the DIMD process with the prediction. For an SGPM coded block, the IPM may, for example, be set as the mode corresponding to the split mode of SGPM.

The prediction strategies of DIMD, TIMD, SGPM, MIP, EIP and/or ITMP may be different from normal intra prediction modes like PLANAR, DC, and directional modes. DIMD, TIMD, SGPM, MIP, and ITMP may allow combination of multiple predictions. MIP may make a prediction using matrix calculation. ITMP may reference the reconstructed region in the current picture. The prediction residual may illustrate different feature(s) from the derived IPM.

MTSS may allow CUs coded with DIMD, TIMD, MIP, EIP, SGPM and/or ITMP to select one LFNST/NSPT transform set out of two candidate sets. If the current block is coded with DIMD, TIMD, MIP, EIP, SGPM, or ITMP and LFNST/NSPT is used, a (e.g., one more) bin may be employed to indicate whether the first candidate transform set or the second candidate transform set is selected. The first candidate transform set may remain (e.g., the same as in a current version of ECM). The second candidate transform set may be derived by the DIMD process with neighboring reconstructed pixels. If a TIMD coded block applies fusion, the second TIMD IPM may be considered first to derive the second candidate set. For a SGPM coded block, the two IPM that SGPM uses may be considered first to derive the second candidate set. The difference between the first and second IPM may be larger than 4 (e.g., to maintain the diversity).

Feature(s) associated with fusion for template-based intra mode derivation (TIMD) are provided herein.

For a (e.g., each) intra prediction mode in MPMs (e.g., and the wide-angle modes if the above-right and/or bottom-left reference samples are available), SATD between the prediction and reconstruction samples of the template may be calculated. One or more (e.g., two) intra prediction modes (e.g., with the minimum SATD) and a (e.g., one) non-angular intra prediction mode (e.g., DC, Planar or block-vector-based mode like IBC or ITMP) with the lowest SATD cost may be selected as the TIMD modes. These (e.g., three) TIMD modes may be fused with the weights (e.g., after applying a position-dependent intra prediction combination (PDPC) process). The weighted intra prediction may be used to code the current CU. PDPC may be included in the derivation of the TIMD modes.

The conditions described herein may be used (e.g., checked) to determine whether the non-angular intra prediction mode is used in fusion.

If the non-angular intra prediction mode is different from the (e.g., two) selected intra prediction modes, fusion may be used.

If the cost associated with the third mode is less than one and a half times the cost associated with the first mode (e.g., costMode3 < 1.5*costMode1, where the costMode3 is the SATD cost of the non-angular intra prediction mode and costMode1 is the SATD cost of the first intra prediction mode), fusion may be used.

If both of these conditions are true, three intra prediction modes may be used to generate the prediction. The weights of the (e.g., each) intra prediction mode may be computed based on the SATD cost, as shown in the following equation:

$$weight_i = \frac{sumSATD - costMode_i}{2 \times sumSATD},\ sumSATD = \sum_{j=1}^{3} costMode_i.$$

Otherwise (e.g., if one or both of the conditions are not true), the non-angular intra prediction mode may not be used in the prediction.

The costs of the (e.g., two) selected modes may be compared with a threshold. A cost factor of 2 may be applied (e.g., costMode2 < 2*costMode1).

If this condition is true (e.g., costMode2 < 2*costMode1), the fusion may be applied. If the condition is not true, mode1 (e.g., only mode1) may be used.

Weights of the modes may be computed from SATD costs of the modes as follows:

$$weight1 = \frac{costMode2}{(costMode1 + costMode2)}$$

where weight2 = 1 - weight1.

The division operations may be performed (e.g., conducted) using an LUT-based integerization technique (e.g., such as the technique used in CCLM).

Location-dependent sample-based fusion (e.g., used in DIMD fusion) may be used for the TIMD fusion. The location-dependent criterion (e.g., applying to amplitudes of the selected predictors) may be replaced by a SATD cost-based criterion. The location-dependent criterion may be determined from a ratio of the normalized SATD of the selected TIMD predictors (e.g., computed in the above and left template area).

FIG. 5 shows an example of matrix-weighted intra prediction (MIP). For predicting the samples of a rectangular block of width W and height H, MIP may take one line of H reconstructed neighboring boundary samples left of the block and one line of W reconstructed neighboring boundary samples above the block as input. The prediction samples may be generated based on boundary down-sampling, matrix vector multiplication, and MIP prediction up-sampling (e.g., as illustrated in FIG. 5).

For example, MIP may involve (e.g., first) down-sampling the reference samples. The down-sampled reference samples may be multiplied with the prediction matrix to generate partial prediction samples. The partial prediction samples may be up-sampled to generate predicted samples at the remaining positions.

Feature(s) associated with LFNST kernel selection for MIP coded blocks are provided herein.

FIG. 6 illustrates an example of using MIP prediction samples to build HOG. For blocks using MIP, the LFNST set index may be derived as follows. DIMD may be used to derive the intra prediction mode of the current block based on the MIP predicted sample(s). For MIP, this derivation may be done before up-sampling. A vertical and/or horizonal gradient may be determined based a (e.g., each) sample of the prediction block. The HoG may be determined based on the vertical and/or horizonal gradient. For example, a horizontal gradient and a vertical gradient may be calculated for a (e.g., each) predicted sample (e.g., to build a HoG 605, for example, as shown in FIG. 6). The intra prediction mode with the largest histogram amplitude values may be used to determine the LFNST transform set and/or LFNST transpose flag.

MIP modes may be derived with fusion.

One or more template tools may use the top and left neighboring areas as templates to derive the MIP modes and transposed flags for the current block (e.g., where the size of templates is width×2 and 2×height). Candidates (e.g., the two best candidates, for example, {MIP modes, transposed flag} with the smallest SATD cost over the template areas) may be derived. The (e.g., two) derived MIP predictions may be fused with (e.g., equal) weights to produce a prediction for the current block.

Fusion may be applied to the current coding unit (e.g., only if the SATD cost of the best candidate is larger than half of the cost of the second-best candidate). If the SATD cost of the best candidate is smaller than half of the cost of the second-best candidate, the prediction may be produced using (e.g., only) the best candidate (e.g., without fusion).

The fusion weights may be calculated by their template costs as follows:

$$weight_{best} = SATDcost_{secBest} / (SATDcost_{best} + SATDcost_{secBest})$$

$$weight_{secBest} = 1 - weight_{best}$$

DIMD may be applied to up-sampled predictors for non-square blocks.

FIGs. 7A and 7B illustrate using DIMD to derive an MIP-LFNST transform set.

The DIMD process in MIP-LFNST transform set derivation may be applied to the up-sampled prediction samples for non-square and sizeId {0, 1} blocks (e.g., as shown in FIG. 7(B)). For other blocks, the DIMD process may be applied (e.g., directly) to the prediction samples (e.g., as illustrated in FIG. 7(A)).

Feature(s) associated with extrapolation filter-based intra prediction (EIP) mode are provided herein.

In the EIP mode, the samples in a CU may be predicted (e.g., from the top-left position to the bottom-right position) by applying an extrapolation filter to neighboring reconstructed samples or predicted samples. The EIP mode may use a 15-tap filter for prediction, such as shown below:

$$pred_{(x,y)} = \sum_{i=0}^{14} (c_i \times t_{(x-offsetX_i,\, y-offsetY_i)})$$

where $pred_{(x,y)}$ is the predicted value at position (x, y) in the CU, $c_i$ is the filter coefficient, and $t_{(x-offsetX_i,y-offsetY_i)}$ is the reconstructed samples or predicted samples.

FIG. 8 illustrates three example EIP filter shapes.

FIG. 9 illustrates three types of reconstructed areas for EIP filter.

The EIP filter may be derived from the neighboring reconstructed samples. The EIP filter may be inherited from the previous EIP coded blocks. One or more (e.g., three) EIP filter shapes and one or more (e.g., three) types of reconstructed areas may be supported (e.g., as shown in FIGs. 8 and 9, respectively).

For a CU coded in the EIP mode, an EIP merge flag may be signaled to indicate whether the EIP filter is inherited from previous blocks coded in EIP mode. If the EIP merge flag is true, an EIP merge list may be constructed from the spatial adjacent, spatial non-adjacent, temporal, and/or history candidates. The position and inclusion order of these candidates may be the same as those used in a cross-component prediction (CCP) merge candidate list. An EIP merge index may be signaled to indicate the selected EIP merge candidate. The filter shape and/or the filter coefficients of the selected candidate may be inherited to code the CU.

If the EIP merge flag is false, the EIP filter may be derived from the neighboring reconstructed samples. In this case, a syntax element (e.g., the relevant syntax element) may be signaled to indicate the type (e.g., which one of the three types) of reconstructed areas and/or the filter shape (e.g., which one of the three filter shapes) are used for the CU. The selected filter may move in the selected reconstructed area (e.g., horizontally or vertically, for example, with a one-pixel step to construct the auto-correlation matrix and the cross-correlation vector). The calculation of coefficients from the auto-correlation matrix and the cross-correlation vector may be the same as that in CCCM.

An intra prediction mode may be derived (e.g., after generating the prediction samples of the CU using the EIP filter). For example, the intra prediction mode may be derived by applying the DIMD process to the prediction samples. For example, a horizontal gradient and a vertical gradient may be calculated for a (e.g., each) predicted sample to build a histogram of gradients. The intra prediction mode corresponding to the largest histogram count may be used to determine the LFNST, NSPT, or MTS transform set.

Feature(s) associated with intra template matching are provided herein.

Intra template matching prediction (IntraTMP) may refer to an intra prediction mode that copies a prediction block (e.g., the best prediction block) from the reconstructed part of the current frame (e.g., the prediction block whose L-shaped template matches the current template). For a predefined search range, the encoder may search for a similar (e.g., the most similar) template to the current template in a reconstructed part of the current frame. The encoder may use the corresponding block as a prediction block. The encoder may signal the usage of this mode. The same prediction operation may be performed at the decoder side.

The prediction signal may be generated by matching the L-shaped, top-only or left-only causal neighbor of the current block with another block in a predefined search area (e.g., as illustrated in FIG. 10). One or more (e.g., six) predefined search areas may be used (e.g., R1 to R6 in FIG. 10). The search areas may include the reconstructed samples from the top and left CTUs and/or part of the reconstructed samples within the current CTU that are located above, left, bottom-left, and top-right to the current block.

IntraTMP may employ an implicit merge mode. In the implicit merge mode, merge candidates may be considered (e.g., without signaling a merge flag or index). For example, the reference positions (e.g., the reference positions pointed to by the block vectors of all the adjacent and non-adjacent merge candidates, for example, the candidates coded in IntraTMP or IBC mode) may be used as (e.g., additional) candidates (e.g., beyond the default search areas). The (e.g., same) template matching cost may be used to compare the merge positions and the defaults positions. For bi-directional IBC merge candidate, one or more (e.g., two) candidates may be retained (e.g., corresponding to each reference frame). For IntraTMP, one or more (e.g., two) candidates may be considered (e.g., corresponding to the best candidate by template search and the coded candidate).

The sum of absolute differences (SAD) may be used as a cost function (e.g., may be used to determine the template cost). The sum of absolute transformed differences (SATD) may be used to determine the template cost. The sum of square difference (SSD) may be used to determine the template cost. The mean square error (MSE) may be used to determine the template cost. The template cost may be a measure of distortion between the template region and a prediction of the template region using the respective candidate intra coding mode.

A search order (e.g., given search order) of the regions (e.g., six regions) may be utilized (e.g., R4, R5, R6, R1, R2, and R3. Within a region (e.g., each region), the decoder may construct a candidate list (e.g., of up to 19) template matching block vectors (e.g., that are ranked in ascending order according to the template cost (SAD)). One or more of the following modes may be supported.

A single predictor mode may be used. In this case, a single predictor may be selected from the candidate list.

Fusion of multiple predictors may be used. In this case, multiple predictors may be blended to derive the final prediction block. The blending weights may be computed from the template matching cost of a (e.g., each) predictor. The blending weights may be computed with Wiener-filter based weight derivation.

Sub-pel precision may be used. If a single predictor is used, sub-pel precision may be used (e.g., with 1/2-pel precision, 1/4-pel precision and 3/4-pel precision, for example, each with 8 possible directions).

A linear filter model may be used. A linear filter may be learned between the reference template and current template. The linear filter may be applied to the linear model of reference block. This mode may be used for single predictor (e.g., if sub-pel precision is not used).

FIG. 10 illustrates an example intra template matching search area.

Decoder side intra mode derivation (DIMD) may be used. DIMD may involve (e.g., rely on the assumption that) the reconstructed pixels (e.g., surrounding a given block to be predicted) carrying information to infer the texture directionality in the block (e.g., the intra prediction modes that most likely generate the predictions with the highest qualities).

Gradient(s) may be extracted from a context of reconstructed pixels around the block. The gradients may be used to fill a histogram of gradients (HoG). The intra prediction modes (e.g., that most likely give the predictions with highest qualities) may be derived from this HoG. Modes (e.g., up to five intra modes) may be derived from the reconstructed neighbor samples. The modes (e.g., those five predictors) may be combined with a non-angular mode predictor (e.g., based on the weights derived from the HoG). The six prediction modes (e.g., one non-angular, five angular) may have a same template or different templates (e.g., each template being different for each prediction mode).

Multiple (e.g., up to five) intra modes may be derived from the reconstructed neighbor samples, if/when DIMD is applied. Multiple predictors associated with the multiple intra modes may, therefore, be combined with the planar mode predictor. Histogram gradients may be utilized to derive the weights. The division of operations in weight derivation may be performed. Such division in weight derivation may be performed utilizing a lookup table (LUT) based integerization scheme, for example, as used in case of the CCLM. In an example, the division operation in the orientation calculation provided as follows:

$$Orient = G_y/G_x$$

may be computed by the following LUT-based scheme:

$$x = \text{Floor}(\ \text{Log2}(\ Gx\ )\ )$$

$$\text{normDiff} = (\ (\ Gx << 4\ ) >> x\ )\ \&\ 15$$

$$x \mathrel{+}= (\ 3 + (\ \text{normDiff}\ != \ 0\ )\ ?\ 1 : 0\ )$$

$$\text{Orient} = (Gy^*\ (\ \text{DivSigTable}[\ \text{normDiff}\ ]\ |\ 8\ ) + (\ 1<<(\ x\text{-}1\ )\ )) >> x$$

where

$$\text{DivSigTable}[16] = \{\ 0, 7, 6, 5\ ,5, 4, 4, 3, 3, 2, 2, 1, 1, 1, 1, 0\ \}.$$

For a block of size $W \times H$, the weight for each of the five derived modes may be modified, for example, if the one the above or left histogram magnitudes is twice larger than the other one. In this case, the weights may be location dependent and computed as follows:

If the above histogram is twice the left, then:

$$w_i(x,y) = \ wDimd_i + \Delta_i - 2\Delta_i \frac{y}{(H-1)}\ .$$

If the left histogram is twice the above, then:

$$w_i(x,y) = \ wDimd_i + \Delta_i - 2\Delta_i \frac{x}{(W-1)}\ ,$$

where $wDimd_i$ is the unmodified uniform weight of the DIMD selected as in JVET-O0449, $\Delta_i$ is predefined and set to 10.

Derived intra modes may be included into a primary list of intra most probable modes (MPM). The DIMD process may be performed before the MPM list is constructed. The primary derived intra mode of a DIMD block may be stored with a block and may be used for MPM list construction of the neighboring blocks.

The region of neighboring reconstructed samples used for computing the histogram of gradients may be modified, for example, depending on reconstructed samples availability. The region of decoded reference samples of current WxH luma CB may be extended towards the above-right side if available, up to W additional columns. The region of decoded reference samples may be extended towards the bottom-left side if available, up to H additional rows.

Derivation (e.g., a DIMD derivation process, or a DIMD-like process) may be used. A DIMD derivation process may use one or more inputs, including inputs of reconstructed neighboring samples of the current block and inputs other than reconstructed neighboring samples of the current block. For example, the input to the DIMD derivation process may be a prediction block, reconstructed neighboring samples of a prediction block, a HoG, and/or the like. Feature(s) described herein may describe a "DIMD process" or a "DIMD derivation process." Those skilled in the art will appreciate that these processes may be used interchangeably, while still having appropriate, corresponding interpretations.

Feature(s) disclosed herein are illustrated in FIG. 11. FIG. 11 illustrates an example of MTSS VIPM derivation with fusion modes.

In the fusion process depicted in FIG. 11, the two or more predictors may be computed based on the intra modes. The two or more predictors may be blended using fusion weights to obtain the final prediction block for the current block. For example, in FIG. 11, predictors of a first intra mode (Intra mode 1), a second intra mode (Intra mode 2), and other intra mode(s) up to an Nth intra mode (Intra mode N) may be fused using a fusion process 1105. In some examples, the VIPM derivation using DIMD for MTSS mode may be performed on the final blended predictor (e.g., except for the case of TIMD fusion mode, in which the IPM from the second fusion mode is directly used to derive the second transform set in MTSS). For example, in FIG. 11, prediction block #1 may be input (e.g., before fusion 1105) into a first DIMD derivation process 1110 to generate a first VIPM (VIPM1); prediction block #2 may be input (e.g., before fusion 1105) into a second DIMD derivation process 1115 to generate a second VIPM (VIPM2); and other prediction blocks (e.g., up to prediction block #n) may be input (e.g., before fusion 1105) into a corresponding DIMD derivation process 1220 to generate an nth VIPM (VIPMn). The VIPMs may be used to select multiple transform sets (e.g., input for multiple transform selection).

The MTSS VIPM derivation process may be extended to (e.g., all) fusion mode(s). For example, MTSS VIPM derivation may be extended to other fusion mode(s), such as derived MIP mode, DIMD fusion, IntraTMP fusion, and/or the like. The VIPM derivation may be conditionally enabled or disabled for fusion modes (e.g., depending on the fusion weights).

MTSS VIPM derivation may be used in derived MIP fusion mode.

MTSS may be employed for some (e.g., special) intra modes (e.g., DIMD, TIMD, IntraTMP, MIP, EIP, SGPM). In these modes, a transform set (e.g., an alternative transform set) may be tested on the block (e.g., in addition to the existing transform set). These (e.g., special) intra modes may rely on DIMD (or similar techniques) to determine the VIPM. The VIPM may be used to derive the (e.g., two) transform sets to be tested for the current block.

The VIPM may be determined (e.g., using an improved technique) for derived MIP fusion mode (e.g., as illustrated in FIG. 12). FIG. 12 illustrates an example of MTSS VIPM derivation for derived MIP mode.

As illustrated in FIG. 12, a first MIP mode (MIP 1) may generate a first prediction block (e.g., prediction block #1), and a second MIP mode (MIP 2) may generate a second prediction block (e.g., prediction block #2). Prediction block #1 and prediction block #2 may be used for a fusion (e.g., to derive an MIP mode with fusion at 1205). The output of the fusion 1205 may be up-sampled at 1210 to generate an MIP up-sampled prediction block 1225. In some examples, the VIPMs may be derived using the DIMD derivation process on the MIP down-sampled prediction block or the MIP up-sampled prediction block.

In some examples, the DIMD derivation may be applied on MIP prediction modes (e.g., the two best MIP prediction modes), for example, before the fusion, to obtain the (e.g., two) VIPMs. For example, in FIG. 12, a first DIMD derivation process 1215 may be performed (e.g., before fusion 1205) on the first prediction block to generate a first intra prediction mode (Intra prediction mode 1). A second DIMD derivation process 1220 may be performed (e.g., before fusion 1205) on the second prediction block to generate a second intra prediction mode (Intra prediction mode 2). These VIPM indices may be used to determine the (e.g., two) transform sets used for the MTSS.

A similar technique may be applicable to EIP mode (e.g., if the derived EIP mode using fusion is used).

Feature(s) described herein may be extended to IntraTMP fusion mode.

If IntraTMP mode uses fusion of multiple predictors (e.g., where multiple predictors are blended to derive the final prediction block), the two or more VIPMs may be derived by applying the DIMD process on the (e.g., each of the) predictors (e.g., before the blending). The two or more VIPMs may be used to determine the multiple transform sets for the MTS selection.

If the MTS selection tests (e.g., only tests) two (e.g., a maximum of two) transform sets, the VIPMs on two (e.g., only the first two) predictors may be computed.

Feature(s) described herein may be extended to DIMD/TIMD fusion of block vector based modes.

In DIMD/TIMD fusion mode, a non-angular intra prediction mode (e.g., DC or planar or best IntraTMP or IBC block-vector (BV) based predictor) may be blended (e.g., in addition to the best directional intra prediction modes).

FIG. 13 illustrates an example of deriving MTSS from TIMD fusion mode using a non-angular mode. The second VIPM mode may be computed using a DIMD process on the block vector based predictor (e.g., instead of using the angular IPM). The second VIPM mode may be used to derive the (e.g., alternative) transform set for the MTS selection.

For example, as shown in FIG. 13, the predictors from a first TIMD mode (TIMD 1), a second TIMD mode (TIMD 2), and a third (e.g., non-angular) TIMD mode (TIMD 3) may be fused to generate a fused TIMD predictor 1305. A DIMD derivation process 1315 may be performed on the predictor from the first TIMD mode to generate a first intra prediction mode (Intra prediction mode 1). A DIMD derivation process 1310 may be performed on the predictor from the third (e.g., non-angular) TIMD mode to generate a second intra prediction mode (Intra prediction mode 2). The first and second intra prediction modes may be used to determine the multiple transform sets for the MTS selection.

Feature(s) associated with conditional derivation of (e.g., two) VIPMs for MTSS in fusion mode are provided herein.

In a fusion mode, if the fusion weights of the (e.g., two) modes are close to each other, the HoGs may be computed per mode that are fused. The VIPM 1 may be derived from the first HoG. The VIPM 2 may be derived from the second HoG. In case, if the absolute difference between the two fusion weights is greater than a (e.g., certain) threshold, the usual (e.g., a legacy) process may be followed.

If the absolute difference between the (e.g., two) fusion weights is greater than a (e.g., certain) threshold, the predictor with the higher fusion weight may be used to compute the HoG and the VIPM values.

An example device (e.g., for video decoding) may determine that a fusion of a plurality of prediction blocks is to be used to predict a video block. The device may determine a prediction block of the plurality of prediction blocks using a prediction mode. The device may determine a histogram of gradients (HoG) based on the prediction block, for example, before the fusion of the plurality of prediction blocks. The device may determine a virtual intra prediction mode (VIPM) based on the HoG. The device may determine a transform set based on the VIPM. The device may decode the video block using one of a plurality of transform sets. The plurality of transform sets may include the determined transform set. The plurality of transform sets may be associated with MTSS.

An example device (e.g., for video encoding) may determine that a fusion of a plurality of prediction blocks is to be used to predict a video block. The device may determine a prediction block of the plurality of prediction blocks using a prediction mode. The device may determine a histogram of gradients (HoG) based on the prediction block, for example, before the fusion of the plurality of prediction blocks. The device may determine a virtual intra prediction mode (VIPM) based on the HoG. The device may determine a transform set based on the VIPM. The device may encode the video block using one of a plurality of transform sets. The plurality of transform sets may include the determined transform set.

The determined transform set may be a first candidate transform set of a plurality of candidate transform sets. The HoG may be a first HoG. The prediction block may be a first prediction block of the plurality of prediction blocks. The VIPM may be a first VIPM. The device may determine a second HoG based on a second prediction block of the plurality of prediction blocks. The device may determine a second VIPM based on the second HoG. The device may determine a second candidate transform set based on the second VIPM.

The device may select two or more prediction modes from a plurality of prediction modes based on a template cost associated with a prediction mode of the plurality of prediction modes. The two modes may be selected based on a (e.g., each) template cost associated with a respective prediction mode of the plurality of prediction modes. The prediction block may be determined based on a first prediction mode of the selected two or more prediction modes.

The first prediction mode may have a lowest template cost among the plurality of prediction modes. A second prediction mode of the selected two or more prediction modes may have a second lowest template cost among the plurality of prediction modes.

The first prediction mode may use matrix weighted intra prediction (MIP). The second prediction mode may use MIP. The device may perform MIP prediction up-sampling after the fusion of the plurality of the prediction blocks. For example, the first and second prediction modes may use MIP. In examples, based on the current block being associated with an MIP fusion mode, a device (e.g., a decoder) may obtain a first prediction block based on a first MIP prediction mode, and a second prediction block based on a second MIP prediction mode. The device may derive a first HoG based on the first prediction block and/or derive a first virtual intra prediction mode based on the first prediction block. The device may derive a second HoG based on the second prediction block and/or derive a second virtual intra prediction mode based on the second prediction block. The device may obtain a first candidate transform set based on the first virtual intra prediction mode. The device may obtain a second candidate transform set based on the second virtual intra prediction mode. The device may select a transform set from the first and the second transform sets based on a transform set index. The device may perform inverse transform for the current block based on the selected transform set.

The first and second prediction modes may use intra template matching prediction (IntraTMP). In examples, based on the current block being associated with an IntraTMP fusion mode, a device (e.g., a decoder) may obtain a first prediction block based on a first IntraTMP prediction mode, and a second prediction block based on a second IntraTMP prediction mode. The device may derive a first HoG based on the first prediction block and/or derive a first virtual intra prediction mode based on the first prediction block. The device may derive a second HoG based on the second prediction block and/or derive a second virtual intra prediction mode based on the second prediction block. The device may obtain a first candidate transform set based on the first virtual prediction mode. The device may obtain a second candidate transform set based on the second virtual prediction mode. The device may select a transform set from the first and the second transform sets based on a transform set index. The device may perform inverse transform for the current block based on the selected transform set. In examples, a device (e.g., for video decoding) may determine that a fusion of a plurality of prediction blocks is to be used to predict a video block. The device may determine a prediction block of the plurality of prediction blocks using an intraTMP prediction mode. The device may determine a histogram of gradients (HoG) based on the prediction block, for example, before the fusion of the plurality of prediction blocks. The device may determine a virtual intra prediction mode (VIPM) based on the HoG. The device may determine a transform set based on the VIPM. The device may decode the video block using one of a plurality of transform sets. The plurality of transform sets may include the determined transform set.

The first and second prediction modes may use extrapolation filter-based intra prediction. In examples, a device (e.g., for video decoding) may determine that a fusion of a plurality of prediction blocks is to be used to predict a video block. The device may determine a prediction block of the plurality of prediction blocks using an EIP prediction mode. The device may determine a histogram of gradients (HoG) based on the prediction block, for example, before the fusion of the plurality of prediction blocks. The device may determine a virtual intra prediction mode (VIPM) based on the HoG. The device may determine a transform set based on the VIPM. The device may decode the video block using one of a plurality of transform sets. The plurality of transform sets may include the determined transform set.

The prediction mode may be one of a plurality of prediction modes. The device may determine that the prediction mode uses a block vector (BV). The prediction mode may be the DC prediction mode or planar prediction mode. Based on the determination that the prediction mode uses the BV, the device may select the prediction mode from the plurality of prediction modes for the determination of the HoG. The prediction mode may be selected to determine the prediction block. The prediction block may be used to determine the HoG.

The determined transform set may be a first candidate transform set of two candidate transform sets. The HoG may be a first HoG. The prediction block may be a first prediction block. The device may determine that a fusion weight difference between a first fusion weight associated with the first prediction block and a second fusion weight associated with a second prediction block of the plurality of prediction blocks is less than a threshold. The threshold may be a (pre) determined or (pre)defined value. Based on the determination that the fusion weight difference is less than the threshold, the device may determine the first HoG based on the first fusion weight associated with the first prediction block and a second HoG based on the second fusion weight associated with the second prediction block.

The fusion weight may be determined based on the amplitude of the HoG(s). If the fusion weight difference is equal to or greater than the threshold, the HoG may be determined based on a prediction block (e.g., the fused/final prediction block), for example, after the prediction block is generated using fusion. In some examples, the prediction block associated with the highest weight (e.g., only the prediction block associated with the highest weight) may be used to determine the VIPM.

The device may determine a template of the prediction block, for example, before the fusion of the plurality of prediction blocks. The HoG may be determined using one or more samples in the template of the prediction block.

The device may receive an indication of a first transform set of the plurality of the transform sets. The device may select the first transform set based on the indication. The device may perform inverse transform of the video block based on the first transform set.

The fusion of the plurality of prediction blocks may be performed by a weighted averaging of the plurality of prediction blocks.

A method for video decoding may include determining that a fusion of a plurality of prediction blocks is to be used to predict a video block. The method may include determining a prediction block of the plurality of prediction blocks using a prediction mode. The method may include determining a histogram of gradients (HoG) based on the prediction block, for example, before the fusion of the plurality of prediction blocks. The method may include determining a virtual intra prediction mode (VIPM) based on the HoG. The method may include determining a transform set based on the VIPM. The method may include decoding the video block using one of a plurality of transform sets, wherein the plurality of transform sets comprises the determined transform set.

A method for video encoding may include determining that a fusion of a plurality of prediction blocks is to be used to predict a video block. The method may include determining a prediction block of the plurality of prediction blocks using a prediction mode. The method may include determining a histogram of gradients (HoG) based on the prediction block, for example, before the fusion of the plurality of prediction blocks. The method may include determining a virtual intra prediction mode (VIPM) based on the HoG. The method may include determining a transform set based on the VIPM. The method may include encoding the video block using one of a plurality of transform sets. The plurality of transform sets may include the determined transform set.

The determined transform set may be a first candidate transform set of a plurality of candidate transform sets. The HoG may be a first HoG. The prediction block may be a first prediction block of the plurality of prediction blocks. The VIPM may be a first VIPM. The method may include determining a second HoG based on a second prediction block of the plurality of prediction blocks. The method may include determining a second VIPM based on the second HoG. The method may include determining a second candidate transform set based on the second VIPM.

A decoder may obtain a predictor (e.g., a prediction block) for a block (e.g., a video block). The decoder may determine a HoG based on the prediction block. The decoder may use fusion of one or more prediction blocks including the prediction block. The decoder may determine a candidate transform set based on the HoG. For example, the decoder may, for a current block, obtain a first predictor and a second predictor, compute a first HoG based on the first predictor, and a second HoG based on the second predictor, and derive a plurality of candidate transform sets based on the first HoG and the second HoG. In examples (e.g., where MIP, intraTMP, or EIP) is used, the decoder may derive a first virtual intra prediction mode based on the first prediction block, derive a second virtual intra prediction mode based on the second prediction block, obtain a first candidate transform set based on the first virtual prediction mode, obtain a second candidate transform set based on the second virtual prediction mode, select a transform set from the first and the second transform sets (e.g., based on an transform set index), and perform inverse transform for the current block based on the selected transform set.

Decoding tools and techniques (e.g., as illustrated in FIG. 3) including, for example, one or more of entropy decoding, inverse quantization, inverse transformation, and differential decoding may be used to enable one or more examples as described herein in a decoder. For example, these decoding tools and techniques may be used to enable one or more of: obtaining a predictor for a block (e.g., based on a BV); determining a gradient based on the predictor; determining a HoG based on the gradient; determining a fusion of one or more prediction blocks including the prediction block; determining a candidate transform set based on the HoG; determining that a fusion of a plurality of prediction blocks is to be used to predict a video block; determining a prediction block of the plurality of prediction blocks using a prediction mode; determining a histogram of gradients (HoG) based on the prediction block, for example, before the fusion of the plurality of prediction blocks; determining a VIPM based on the HoG; determining a transform set based on the VIPM; decoding the video block using one of a plurality of transform sets; determining a first candidate transform set of a plurality of candidate transform sets; determining a first HoG; determining a first prediction block of the plurality of prediction blocks; determining a first VIPM; determining a second HoG based on a second prediction block of the plurality of prediction blocks; determining a second VIPM based on the second HoG; determining a second candidate transform set based on the second VIPM; selecting two or more prediction modes from a plurality of prediction modes, for example, based on a template cost associated with a prediction mode of the plurality of prediction modes; determining the prediction block based on a first prediction mode of the selected two or more prediction modes; determining that the first prediction mode having a lowest template cost among the plurality of prediction modes; determining that a second prediction mode of the selected two or more prediction modes having a second lowest template cost among the plurality of prediction modes; determining that the first prediction mode uses matrix weighted intra prediction (MIP); determining that the second prediction mode uses MIP; performing MIP prediction up-sampling, for example, after the fusion of the plurality of the prediction blocks; determining that the first and second prediction modes use extrapolation filter-based intra prediction; determining that the first and second prediction modes use IntraTMP; determining that the prediction mode uses a BV; based on the determination that the prediction mode uses the BV, selecting the prediction mode from the plurality of prediction modes for the determination of the HoG; determining that a fusion weight difference between a first fusion weight associated with the first prediction block and a second fusion weight associated with a second prediction block of the plurality of prediction blocks is less than a threshold; based on the determination that the fusion weight difference is less than the threshold, determining the first HoG based on the first fusion weight associated with the first prediction block and a second HoG based on the second fusion weight associated with the second prediction block; determining a template of the prediction block, for example, before the fusion of the plurality of prediction blocks; determining the HoG using one or more samples in the template of the prediction block; receiving an indication of a first transform set of the plurality of the transform sets; selecting the first transform set based on the indication; performing inverse transform of the video block based on the first transform set; performing a weighted averaging of the plurality of prediction blocks.

An encoder may obtain a predictor (e.g., a prediction block) for a block (e.g., a video block). The encoder may determine a HoG based on the prediction block. The encoder may use fusion of one or more prediction blocks including the prediction block. The encoder may determine a candidate transform set based on the HoG. For example, the encoder may, for a current block, obtain a first predictor and a second predictor, compute a first HoG based on the first predictor, and a second HoG based on the second predictor, and derive a plurality of candidate transform sets based on the first HoG and the second HoG. In examples (e.g., where MIP, intraTMP, or EIP) is used, the encoder may derive a first virtual intra prediction mode based on the first prediction block, derive a second virtual intra prediction mode based on the second prediction block, obtain a first candidate transform set based on the first virtual prediction mode, obtain a second candidate transform set based on the second virtual prediction mode, select a transform set from the first and the second transform sets (e.g., based on an transform set index), and perform transform for the current block based on the selected transform set.

Encoding tools and techniques (e.g., as illustrated in FIG. 2) including one or more of quantization, entropy coding, inverse quantization, transformation, inverse transformation, and differential coding may be used to enable one or more examples as described herein in the encoder. These encoding tools and techniques may be used to enable one or more of: obtaining a predictor for a block (e.g., based on a BV); determining a gradient based on the predictor; determining a HoG based on the gradient; determining a fusion of one or more prediction blocks including the prediction block; determining a candidate transform set based on the HoG; determining that a fusion of a plurality of prediction blocks is to be used to predict a video block; determining a prediction block of the plurality of prediction blocks using a prediction mode; determining a histogram of gradients (HoG) based on the prediction block, for example, before the fusion of the plurality of prediction blocks; determining a VIPM based on the HoG; determining a transform set based on the VIPM; encoding the video block using one of a plurality of transform sets; determining a first candidate transform set of a plurality of candidate transform sets; determining a first HoG; determining a first prediction block of the plurality of prediction blocks; determining a first VIPM; determining a second HoG based on a second prediction block of the plurality of prediction blocks; determining a second VIPM based on the second HoG; determining a second candidate transform set based on the second VIPM; selecting two or more prediction modes from a plurality of prediction modes, for example, based on a template cost associated with a prediction mode of the plurality of prediction modes; determining the prediction block based on a first prediction mode of the selected two or more prediction modes; determining that the first prediction mode having a lowest template cost among the plurality of prediction modes; determining that a second prediction mode of the selected two or more prediction modes having a second lowest template cost among the plurality of prediction modes; determining that the first prediction mode uses matrix weighted intra prediction (MIP); determining that the second prediction mode uses MIP; performing MIP prediction up-sampling, for example, after the fusion of the plurality of the prediction blocks; determining that the first and second prediction modes use extrapolation filter-based intra prediction; determining that the first and second prediction modes use IntraTMP; determining that the prediction mode uses a BV; based on the determination that the prediction mode uses the BV, selecting the prediction mode from the plurality of prediction modes for the determination of the HoG; determining that a fusion weight difference between a first fusion weight associated with the first prediction block and a second fusion weight associated with a second prediction block of the plurality of prediction blocks is less than a threshold; based on the determination that the fusion weight difference is less than the threshold, determining the first HoG based on the first fusion weight associated with the first prediction block and a second HoG based on the second fusion weight associated with the second prediction block; determining a template of the prediction block, for example, before the fusion of the plurality of prediction blocks; determining the HoG using one or more samples in the template of the prediction block; selecting the first transform set; performing transform based on the first transform set; sending (e.g., to a decoding device) an indication of the first transform set; performing a weighted averaging of the plurality of prediction blocks.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

**1.** A device for video decoding, comprising:
a processor configured to:

determine that a fusion of a plurality of prediction blocks is to be used to predict a video block;
determine a prediction block of the plurality of prediction blocks using a prediction mode;
before the fusion of the plurality of prediction blocks, determine a histogram of gradients (HoG) based on the prediction block;
determine a virtual intra prediction mode (VIPM) based on the HoG;
determine a transform set based on the VIPM; and
decode the video block using one of a plurality of transform sets, wherein the plurality of transform sets comprises the determined transform set.

**2.** A device for video encoding, comprising:
a processor configured to:

determine that a fusion of a plurality of prediction blocks is to be used to predict a video block;
determine a prediction block of the plurality of prediction blocks using a prediction mode;
before the fusion of the plurality of prediction blocks, determine a histogram of gradients (HoG) based on the prediction block;
determine a virtual intra prediction mode (VIPM) based on the HoG;
determine a transform set based on the VIPM; and
encode the video block using one of a plurality of transform sets, wherein the plurality of transform sets comprises the determined transform set.

3. The device of claim 1 or claim 2, wherein the determined transform set is a first candidate transform set of a plurality of candidate transform sets, the HoG is a first HoG, the prediction block is a first prediction block of the plurality of prediction blocks, the VIPM is a first VIPM, and the processor is further configured to:

determine a second HoG based on a second prediction block of the plurality of prediction blocks;
determine a second VIPM based on the second HoG; and
determine a second candidate transform set based on the second VIPM.

4. The device of claim 1 or claim 2, wherein the processor is further configured to select two or more prediction modes from a plurality of prediction modes based on a template cost associated with a prediction mode of the plurality of prediction modes, wherein the prediction block is determined based on a first prediction mode of the selected two or more prediction modes.

5. The device of claim 4, wherein the first prediction mode has a lowest template cost among the plurality of prediction modes, and a second prediction mode of the selected two or more prediction modes has a second lowest template cost among the plurality of prediction modes.

6. The device of claim 5, wherein the first prediction mode uses matrix weighted intra prediction (MIP), and the second prediction mode uses MIP, and the processor is further configured to perform MIP prediction up-sampling after the fusion of the plurality of the prediction blocks.

7. The device of claim 5, wherein the first and second prediction modes use extrapolation filter-based intra prediction or intra template matching prediction (IntraTMP).

8. The device of claim 1 or claim 2, wherein the prediction mode is one of a plurality of prediction modes, and the processor is further configured to:

determine that the prediction mode uses a block vector (BV); and
based on the determination that the prediction mode uses the BV, select the prediction mode from the plurality of prediction modes for the determination of the HoG.

9. The device of claim 1 or claim 2, wherein the determined transform set is a first candidate transform set of two candidate transform sets, the HoG is a first HoG, the prediction block is a first prediction block, and the processor is further configured to:

determine that a fusion weight difference between a first fusion weight associated with the first prediction block and a second fusion weight associated with a second prediction block of the plurality of prediction blocks is less than a threshold; and
based on the determination that the fusion weight difference is less than the threshold, determine the first HoG based on the first fusion weight associated with the first prediction block and a second HoG based on the second fusion weight associated with the second prediction block.

10. The device of claim 1 or claim 2, wherein the processor is further configured to:
before the fusion of the plurality of prediction blocks, determine a template of the prediction block, wherein the HoG is determined using one or more samples in the template of the prediction block.

11. The device of claim 1, wherein the processor is further configured to:

receive an indication of a first transform set of the plurality of the transform sets;

select the first transform set based on the indication; and
perform inverse transform of the video block based on the first transform set.

**12.** The device of claim 1 or claim 2, wherein the fusion of the plurality of prediction blocks is performed by a weighted averaging of the plurality of prediction blocks.

**13.** A method for video decoding, comprising:

determining that a fusion of a plurality of prediction blocks is to be used to predict a video block;
determining a prediction block of the plurality of prediction blocks using a prediction mode;
before the fusion of the plurality of prediction blocks, determining a histogram of gradients (HoG) based on the prediction block;
determining a virtual intra prediction mode (VIPM) based on the HoG;
determining a transform set based on the VIPM; and
decoding the video block using one of a plurality of transform sets, wherein the plurality of transform sets comprises the determined transform set.

**14.** A method for video encoding, comprising:

determining that a fusion of a plurality of prediction blocks is to be used to predict a video block;
determining a prediction block of the plurality of prediction blocks using a prediction mode;
before the fusion of the plurality of prediction blocks, determining a histogram of gradients (HoG) based on the prediction block;
determining a virtual intra prediction mode (VIPM) based on the HoG;
determining a transform set based on the VIPM; and
encoding the video block using one of a plurality of transform sets, wherein the plurality of transform sets comprises the determined transform set.

**15.** The method of claim 13 or claim 14, wherein the determined transform set is a first candidate transform set of a plurality of candidate transform sets, the HoG is a first HoG, the prediction block is a first prediction block of the plurality of prediction blocks, the VIPM is a first VIPM, and the method further comprises:

determining a second HoG based on a second prediction block of the plurality of prediction blocks;
determining a second VIPM based on the second HoG; and
determining a second candidate transform set based on the second VIPM.

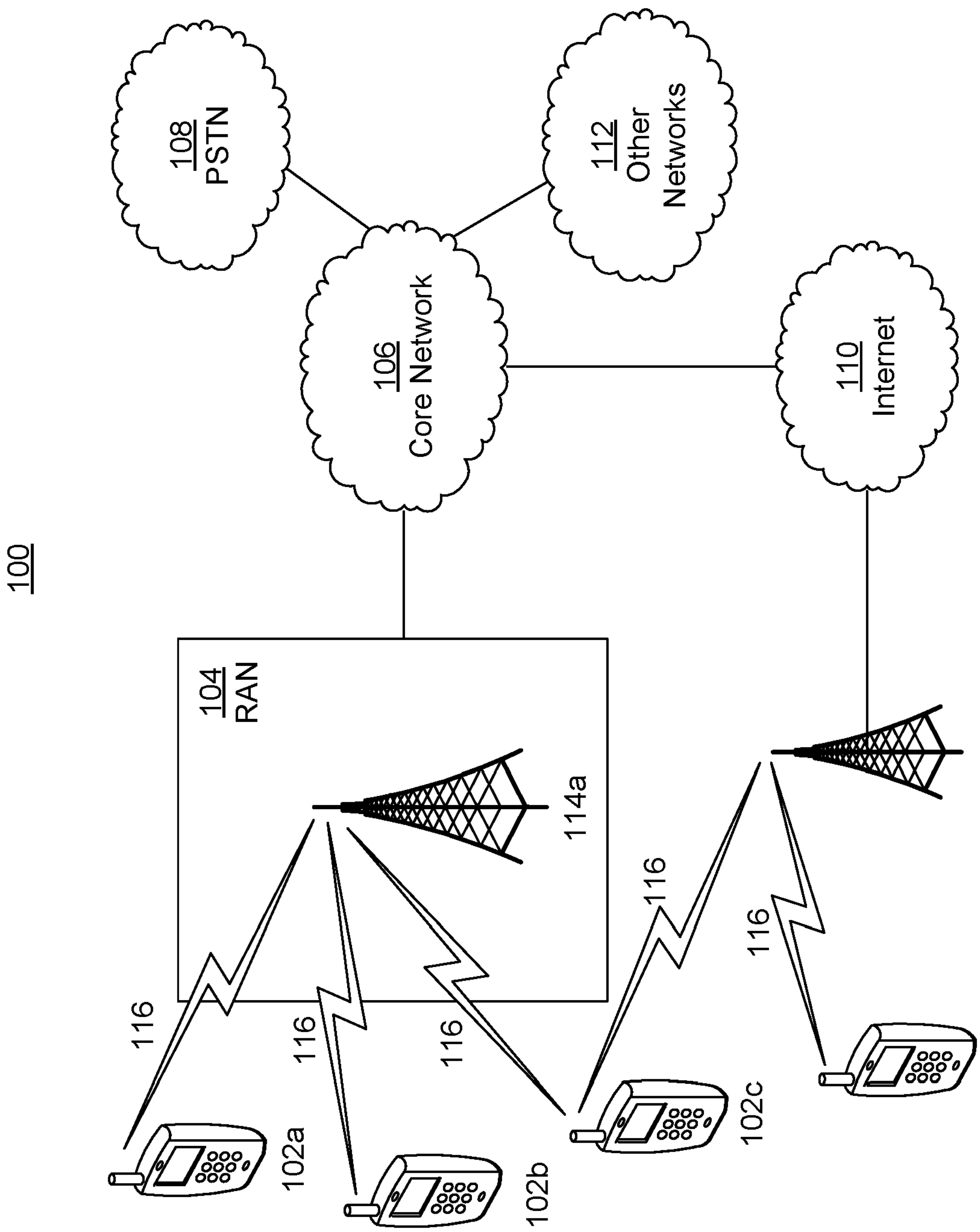
100
108
PSTN
112
Other
Networks
106
Core Network
110
Internet
104
RAN
114a
114b
116
116
116
116
116
102a
102b
102c
102d

FIG. 1A

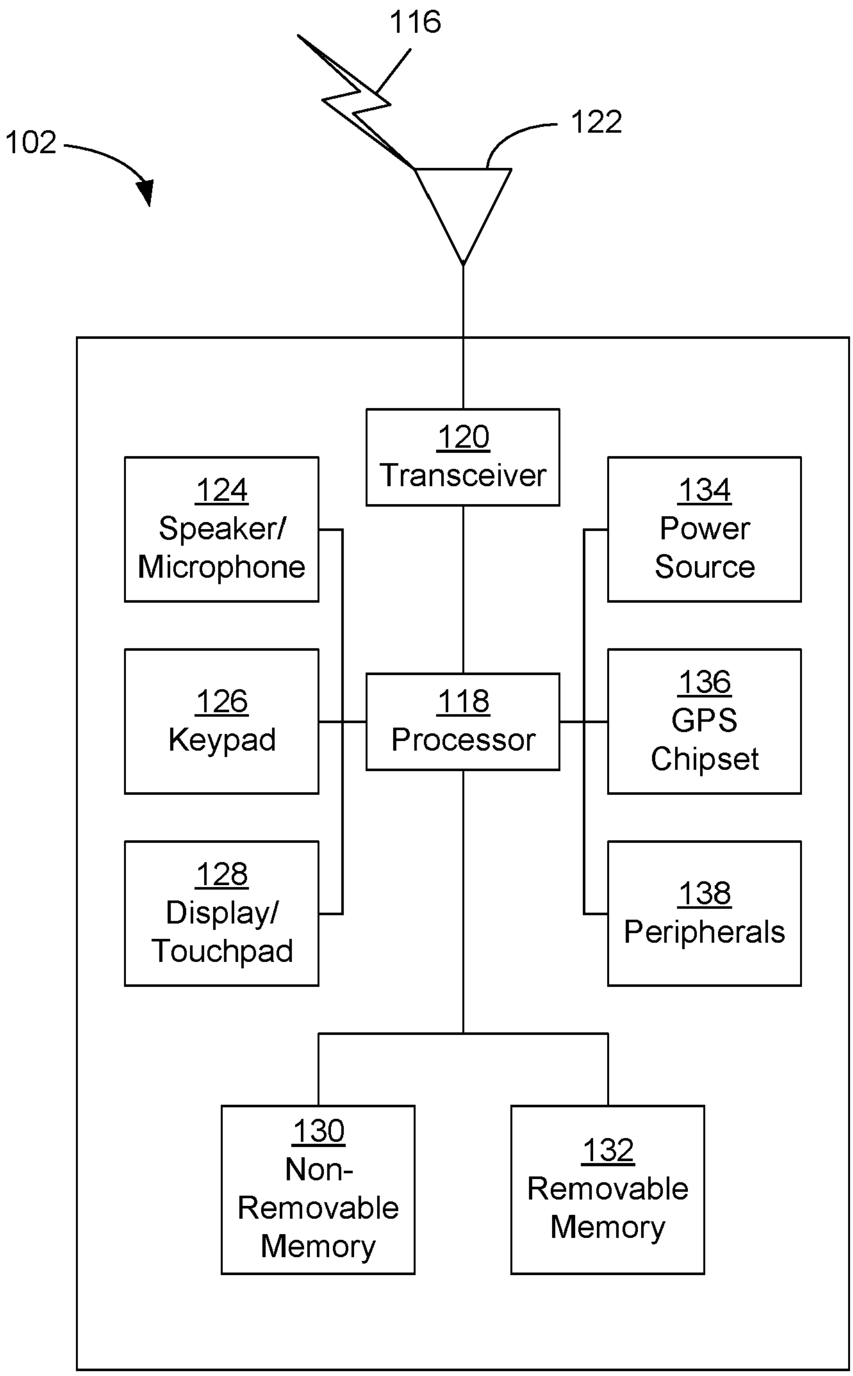
116
102
122
120
Transceiver
124
Speaker/
Microphone
134
Power
Source
126
Keypad
118
Processor
136
GPS
Chipset
128
Display/
Touchpad
138
Peripherals
130
Non-
Removable
Memory
132
Removable
Memory

FIG. 1B

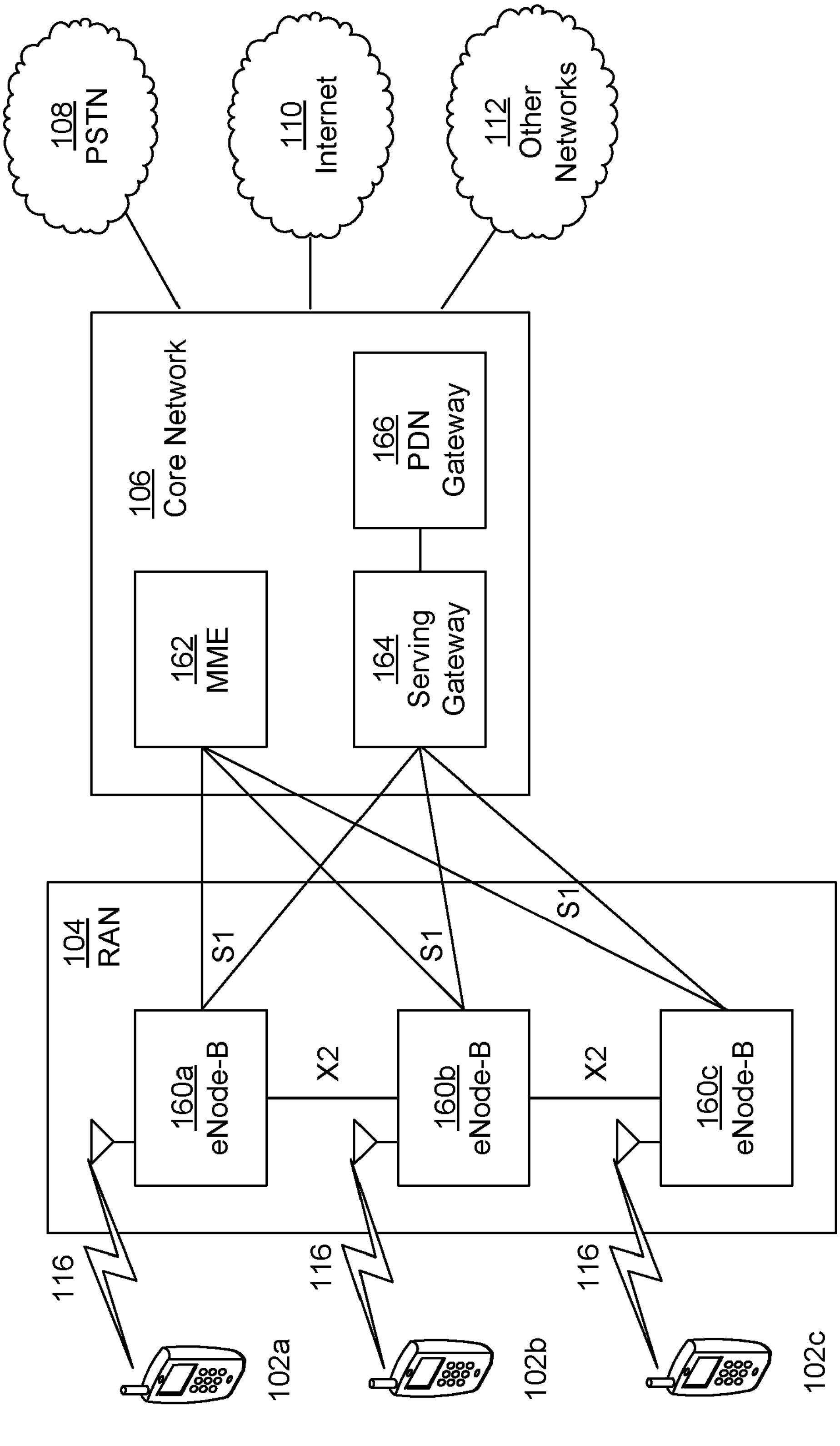
108
PSTN
110
Internet
112
Other
Networks
106
Core Network
162
MME
164
Serving
Gateway
166
PDN
Gateway
104
RAN
S1
S1
S1
160a
eNode-B
X2
160b
eNode-B
X2
160c
eNode-B
116
116
116
102a
102b
102c

FIG. 1C

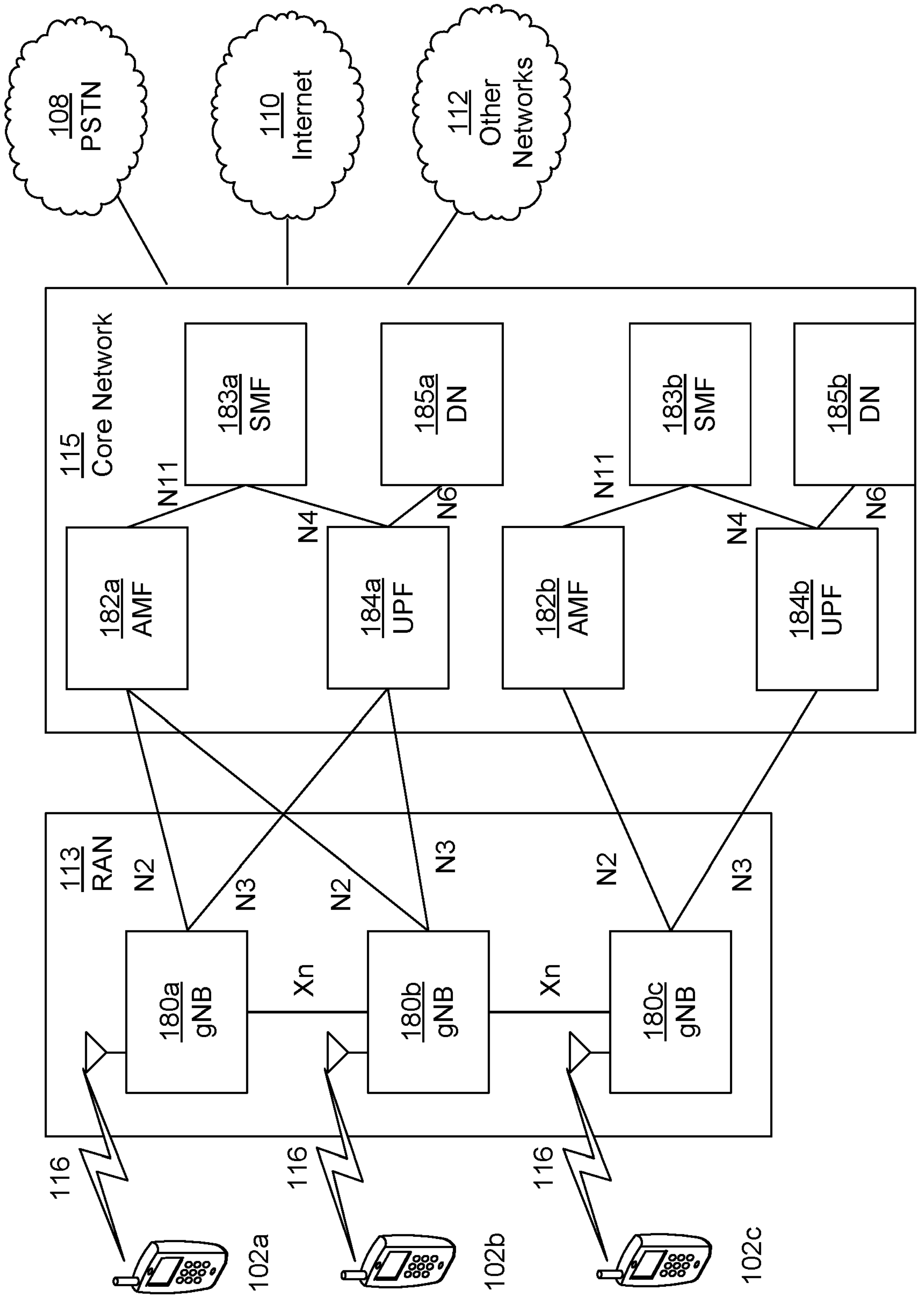
108
PSTN
110
Internet
112
Other
Networks
115
Core Network
183a
SMF
185a
DN
183b
SMF
185b
DN
182a
AMF
184a
UPF
182b
AMF
184b
UPF
N11
N4
N6
N11
N4
N6
113
RAN
N2
N3
N2
N3
N2
N3
180a
gNB
180b
gNB
180c
gNB
Xn
Xn
116
116
116
102a
102b
102c

FIG. 1D

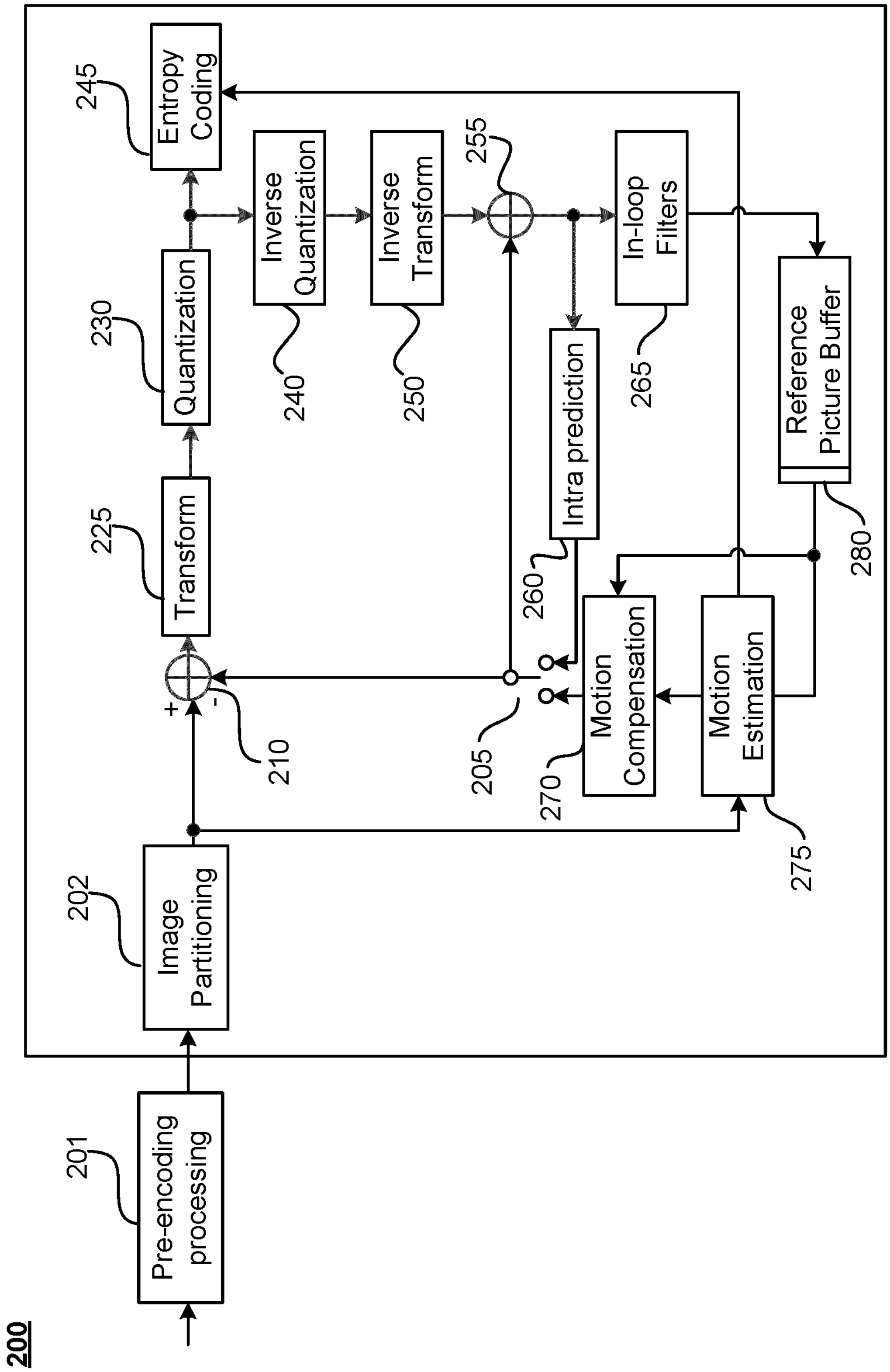
200
Pre-encoding processing
201
Image Partitioning
202
Transform
225
Quantization
230
Entropy Coding
245
Inverse Quantization
240
Inverse Transform
250
255
In-loop Filters
265
Intra prediction
260
Reference Picture Buffer
280
Motion Compensation
270
Motion Estimation
275
210
205
+
-

FIG. 2

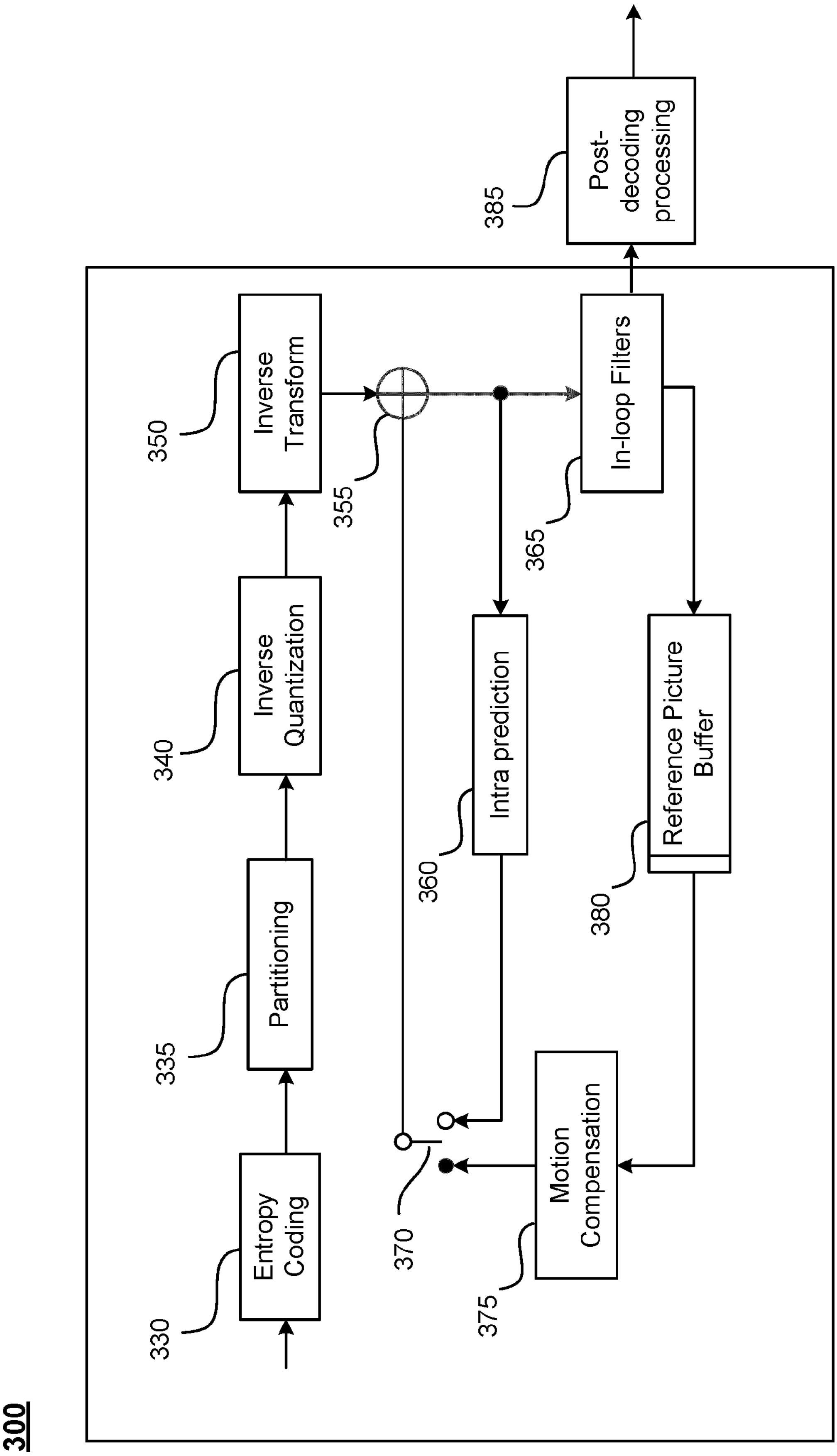
300
330
Entropy Coding
335
Partitioning
340
Inverse Quantization
350
Inverse Transform
355
360
Intra prediction
365
In-loop Filters
370
375
Motion Compensation
380
Reference Picture Buffer
385
Post-decoding processing

FIG. 3

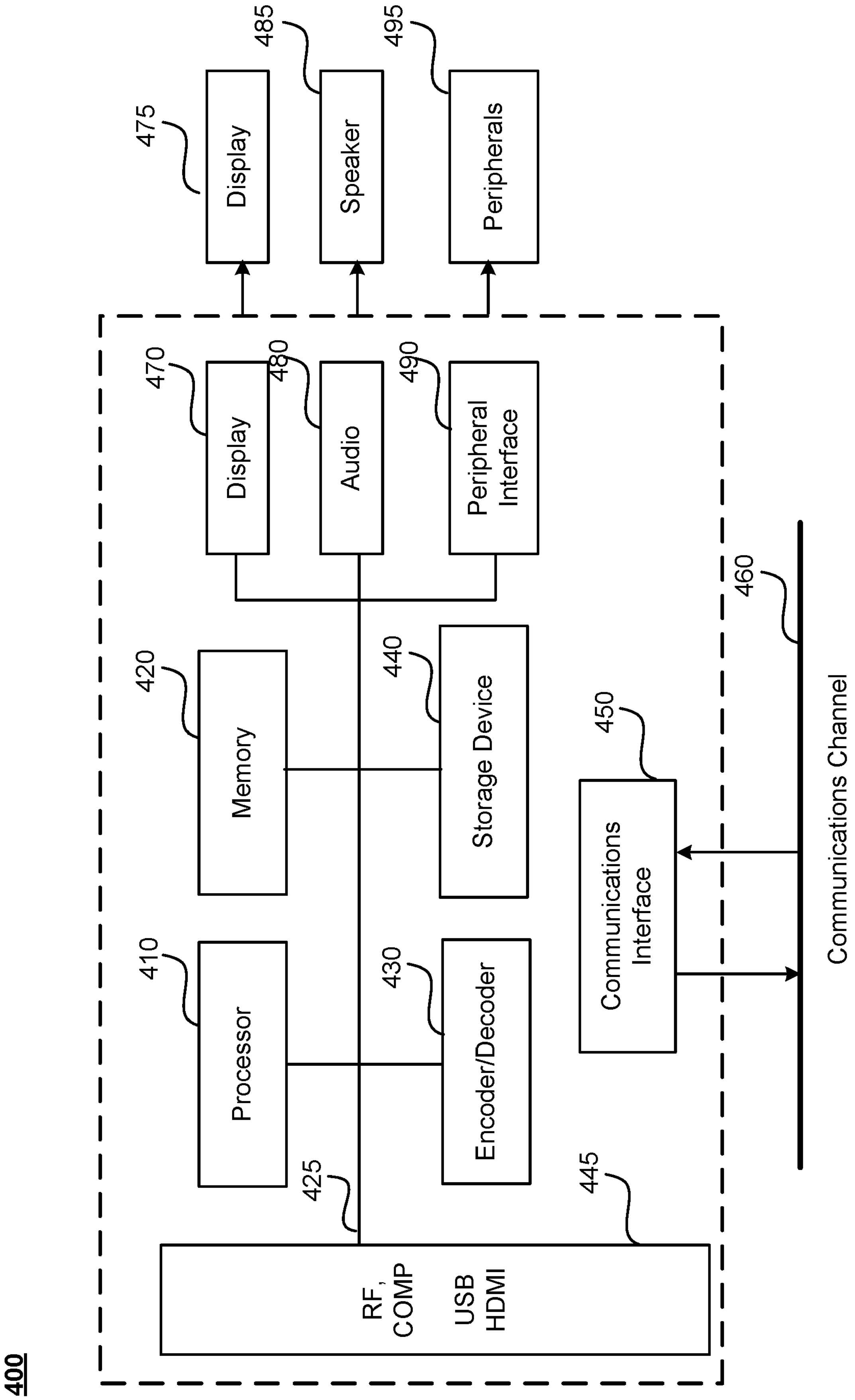
400
RF, COMP
USB HDMI
445
425
Processor
410
Encoder/Decoder
430
Memory
420
Storage Device
440
Communications Interface
450
Communications Channel
460
Display
470
Audio
480
Peripheral Interface
490
Display
475
Speaker
485
Peripherals
495

FIG. 4

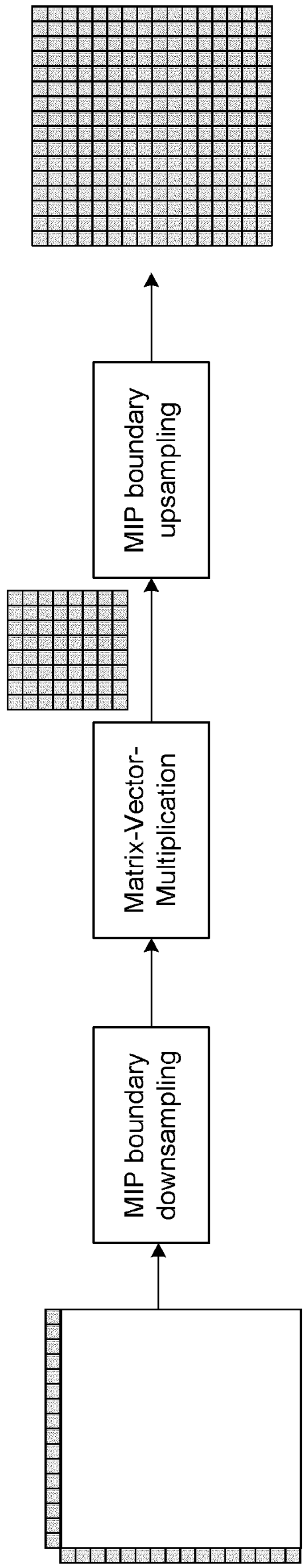
MIP boundary downsampling
Matrix-Vector-Multiplication
MIP boundary upsampling

FIG. 5

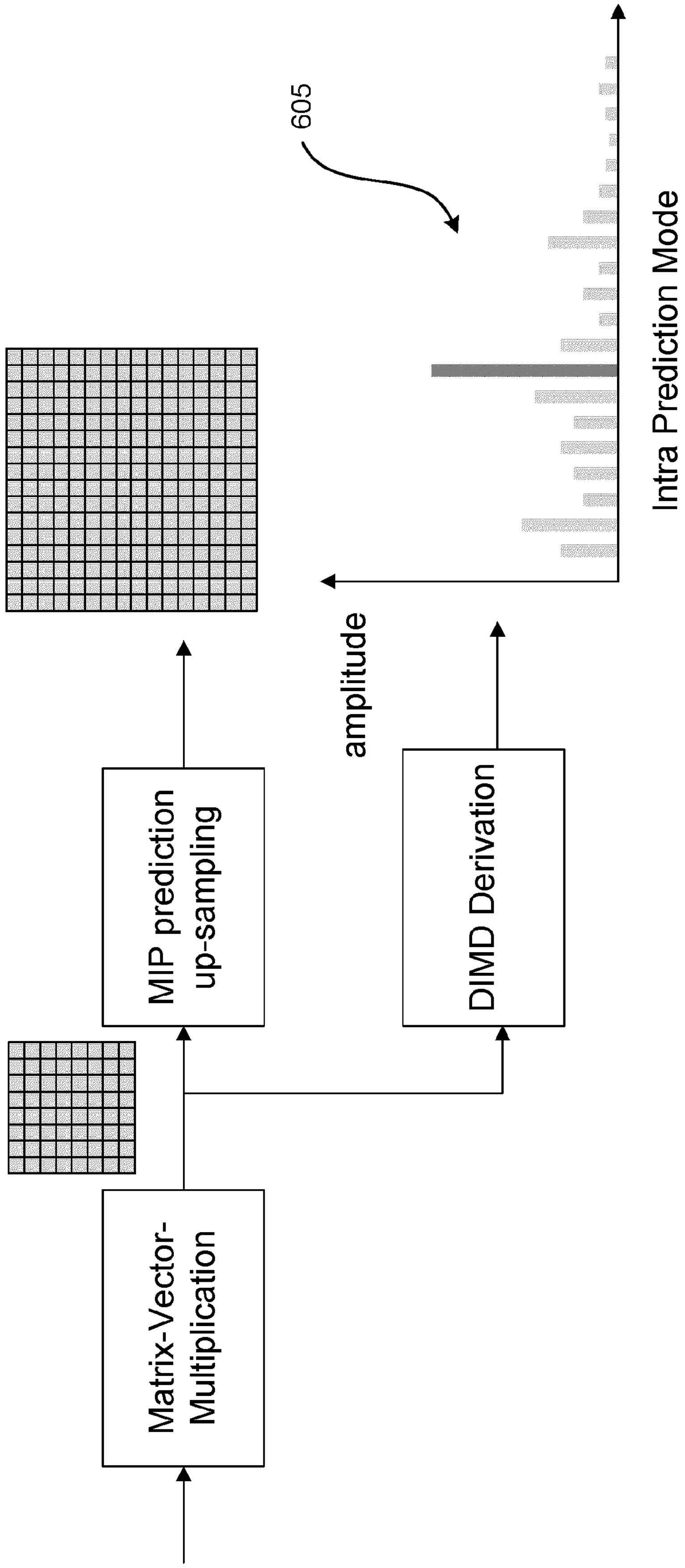
Matrix-Vector-
Multiplication
MIP prediction
up-sampling
DIMD Derivation
amplitude
Intra Prediction Mode
605

FIG. 6

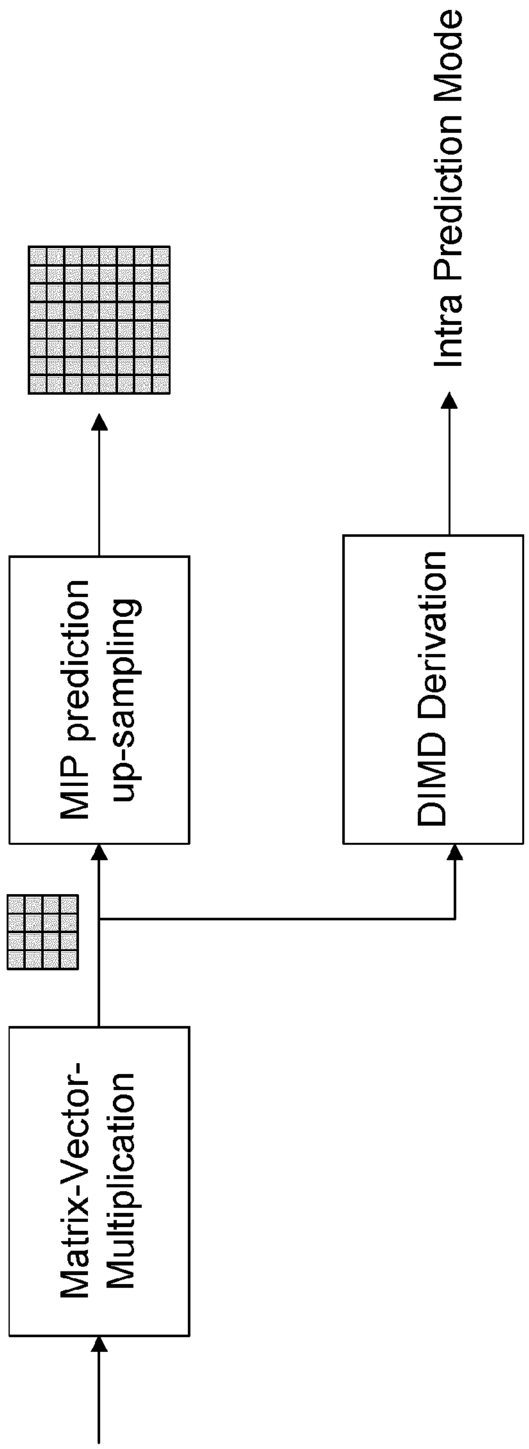
Matrix-Vector-
Multiplication
MIP prediction
up-sampling
DIMD Derivation
Intra Prediction Mode

FIG. 7A

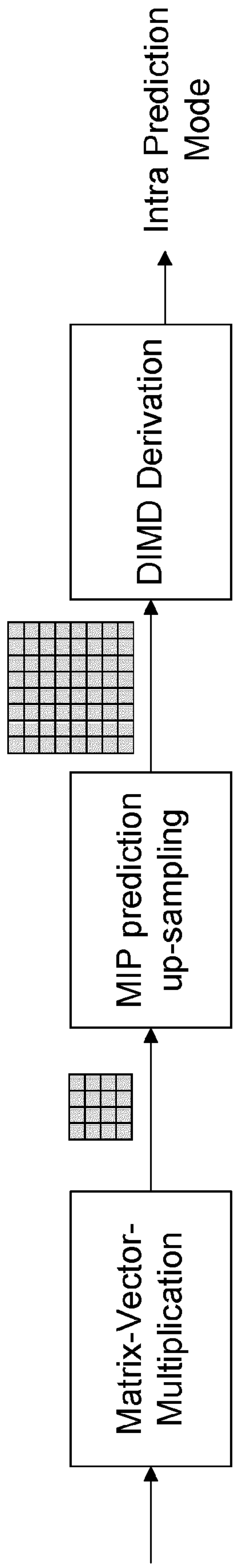
Matrix-Vector-
Multiplication
MIP prediction
up-sampling
DIMD Derivation
Intra Prediction
Mode

FIG. 7B

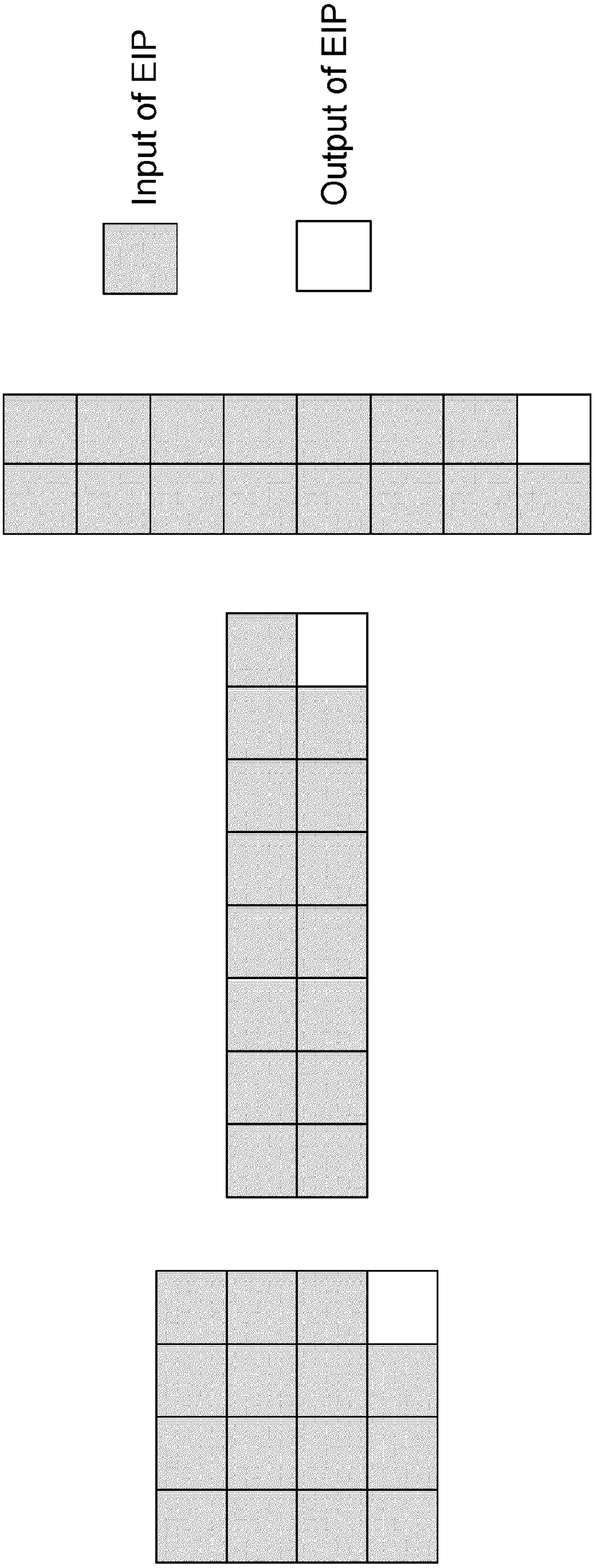


FIG. 8

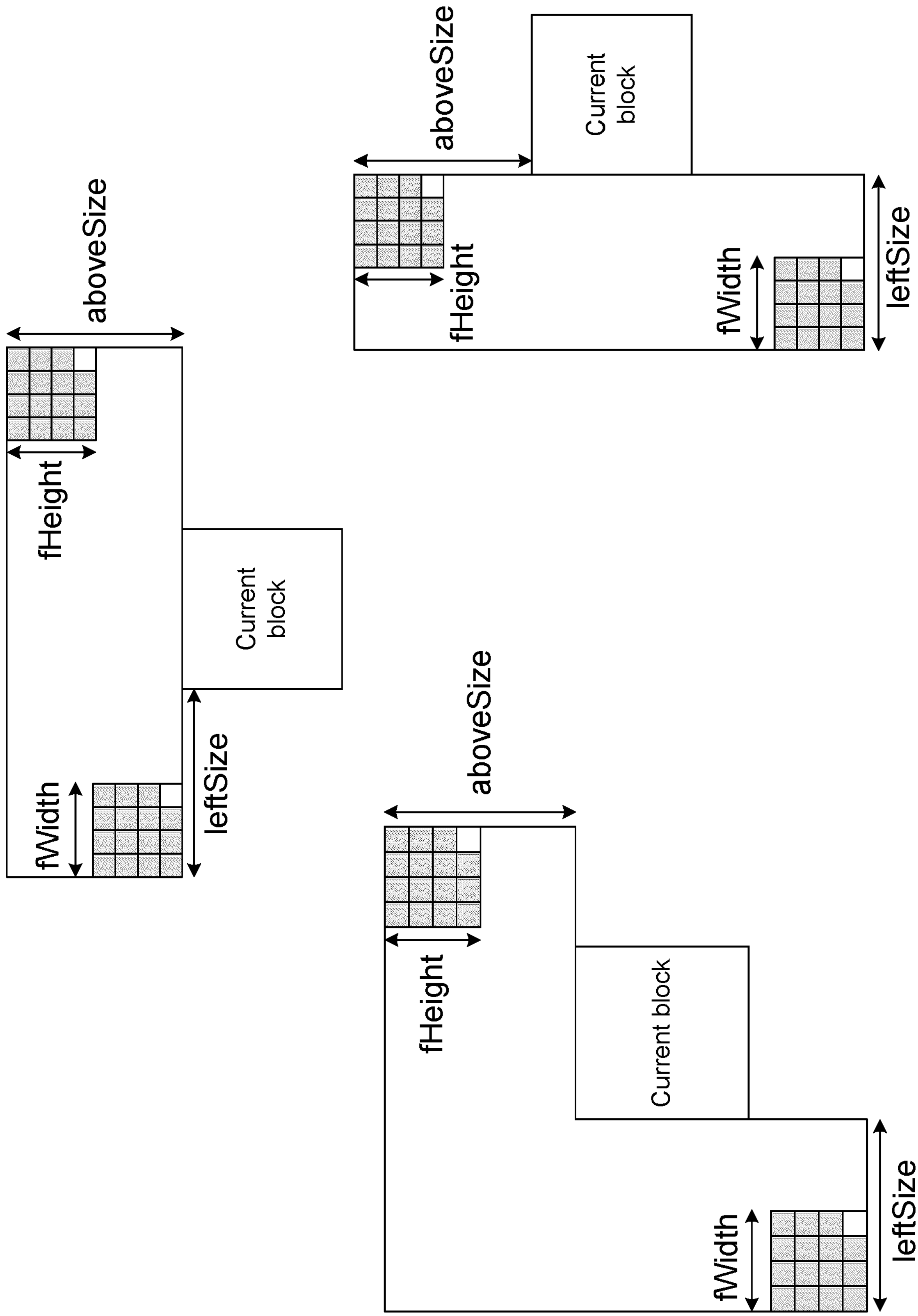
aboveSize
fHeight
fWidth
leftSize
Current block
aboveSize
fHeight
fWidth
leftSize
Current block
aboveSize
fHeight
fWidth
leftSize
Current block

FIG. 9

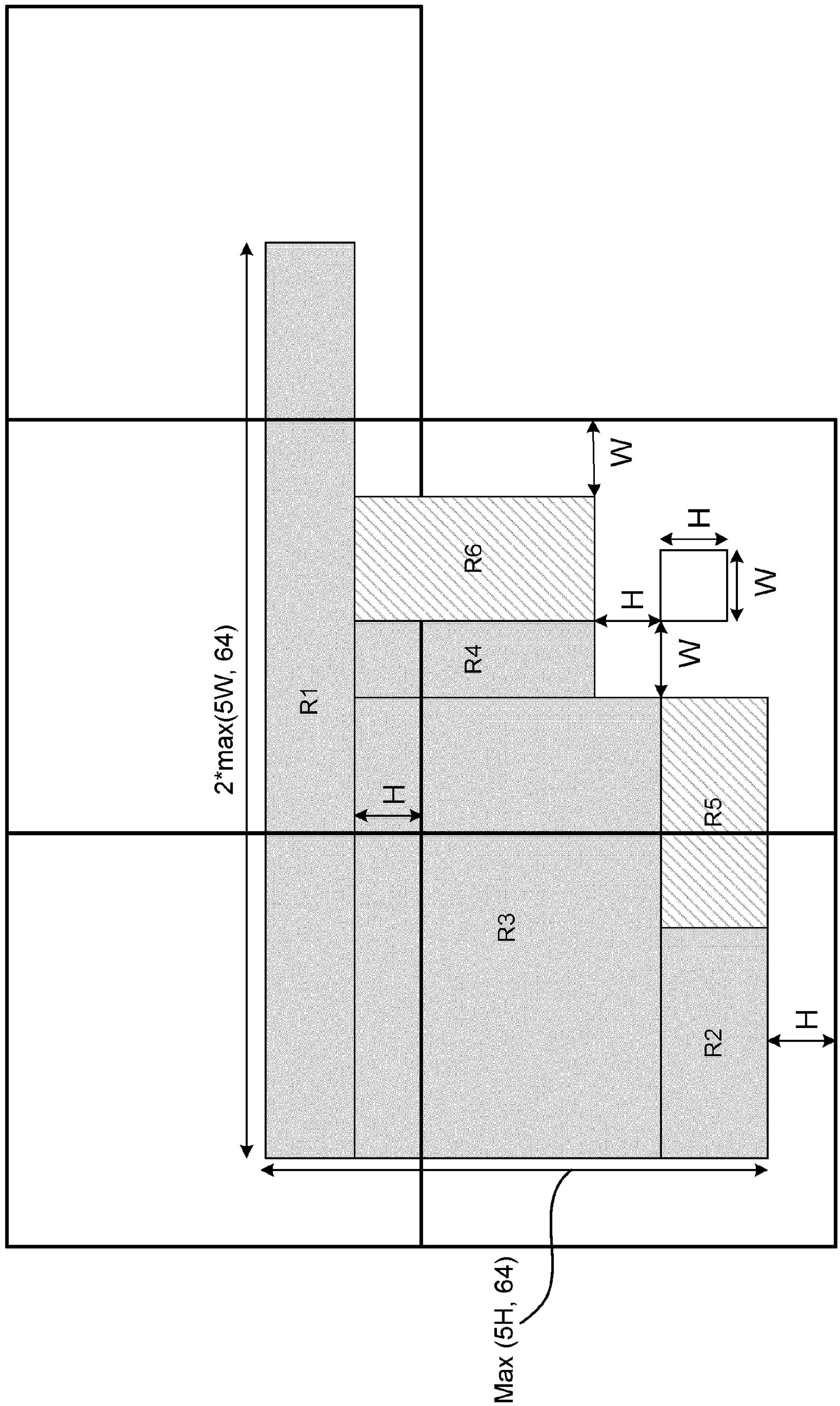


FIG. 10

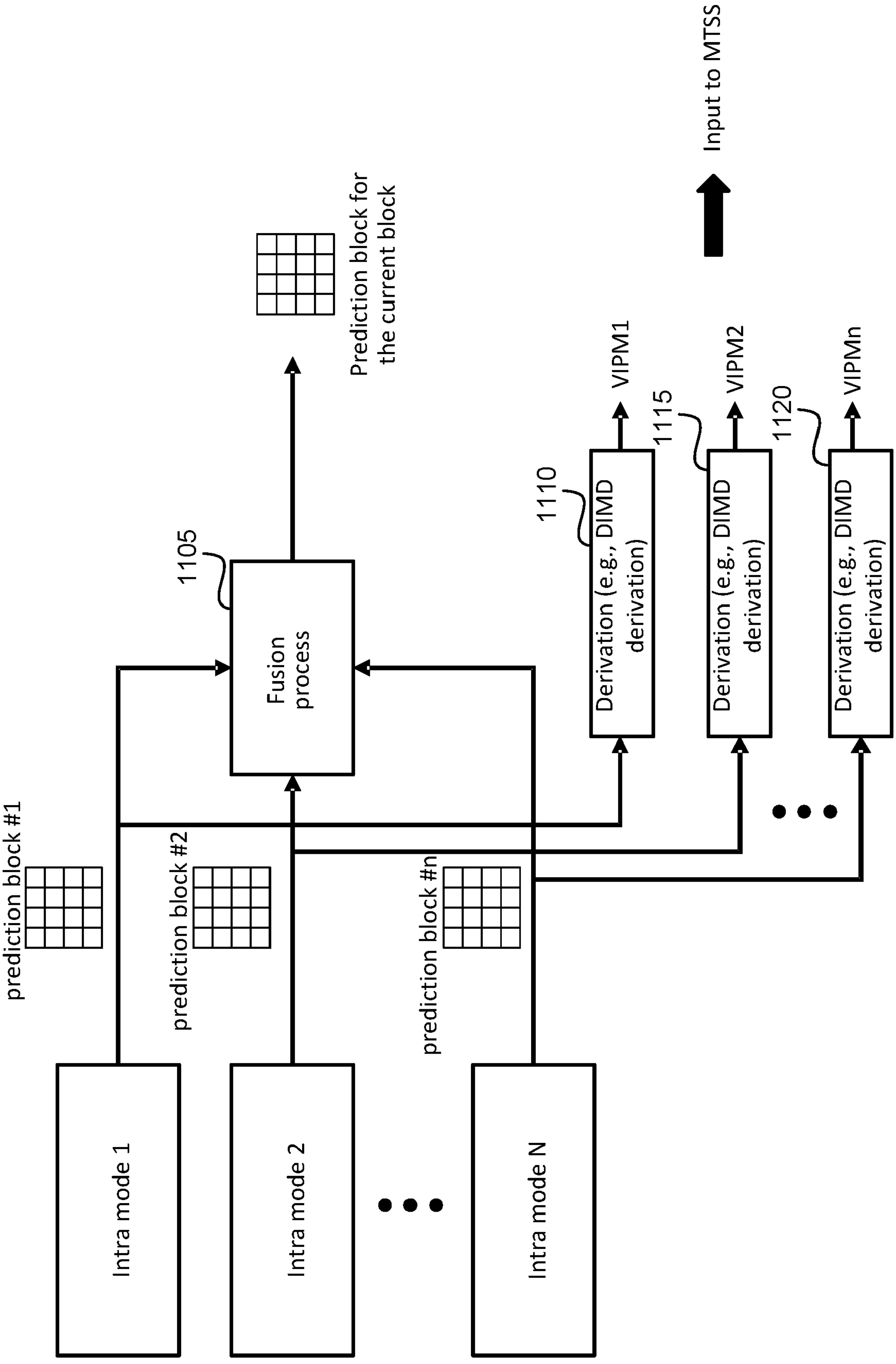
Intra mode 1
Intra mode 2
Intra mode N
prediction block #1
prediction block #2
prediction block #n
Fusion process
1105
Prediction block for the current block
Derivation (e.g., DIMD derivation)
1110
VIPM1
Derivation (e.g., DIMD derivation)
1115
VIPM2
Derivation (e.g., DIMD derivation)
1120
VIPMn
Input to MTSS

FIG. 11

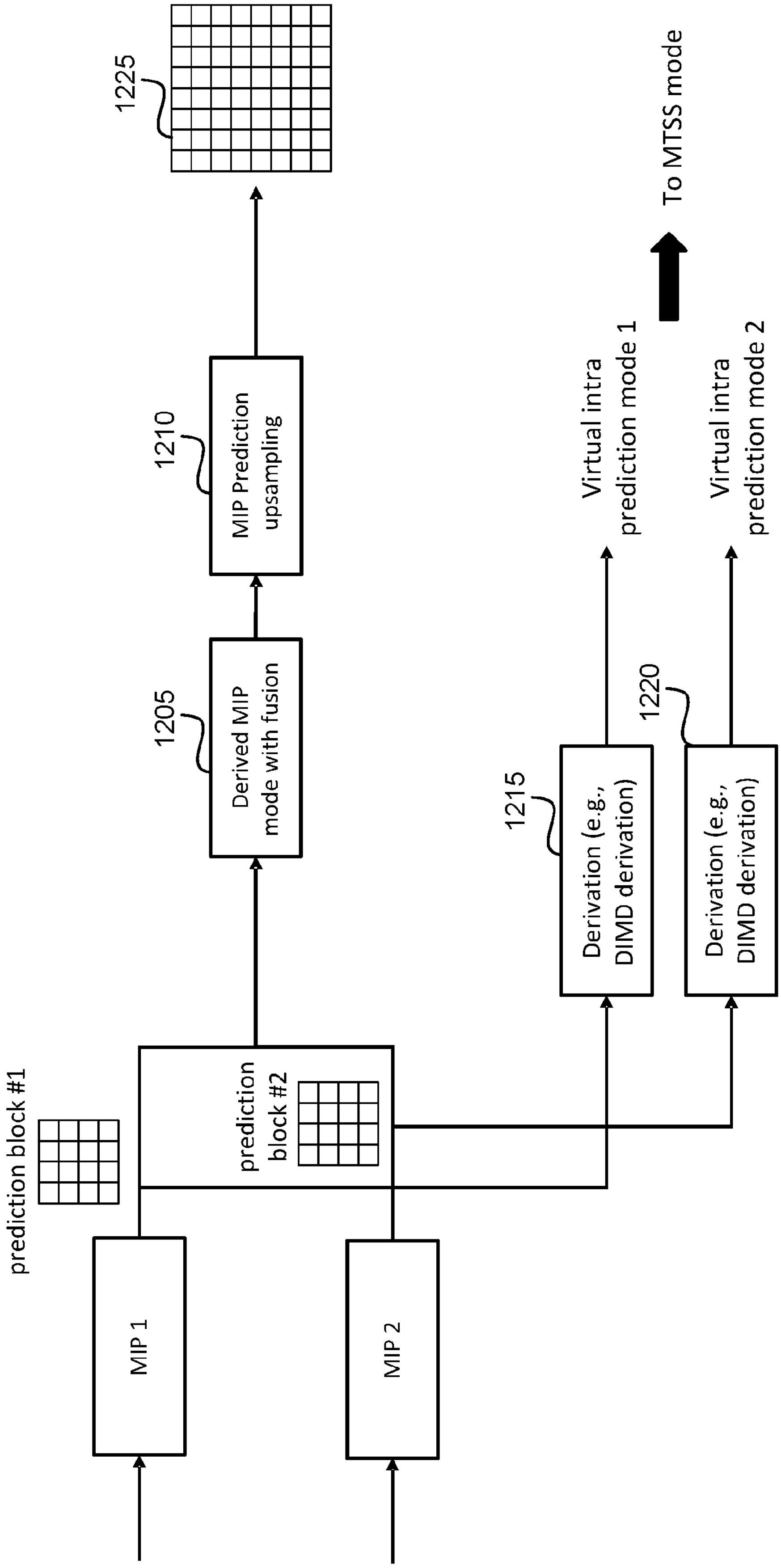
prediction block #1
prediction block #2
MIP 1
MIP 2
1205
Derived MIP mode with fusion
1210
MIP Prediction upsampling
1225
1215
Derivation (e.g., DIMD derivation)
1220
Derivation (e.g., DIMD derivation)
Virtual intra prediction mode 1
Virtual intra prediction mode 2
To MTSS mode

FIG. 12

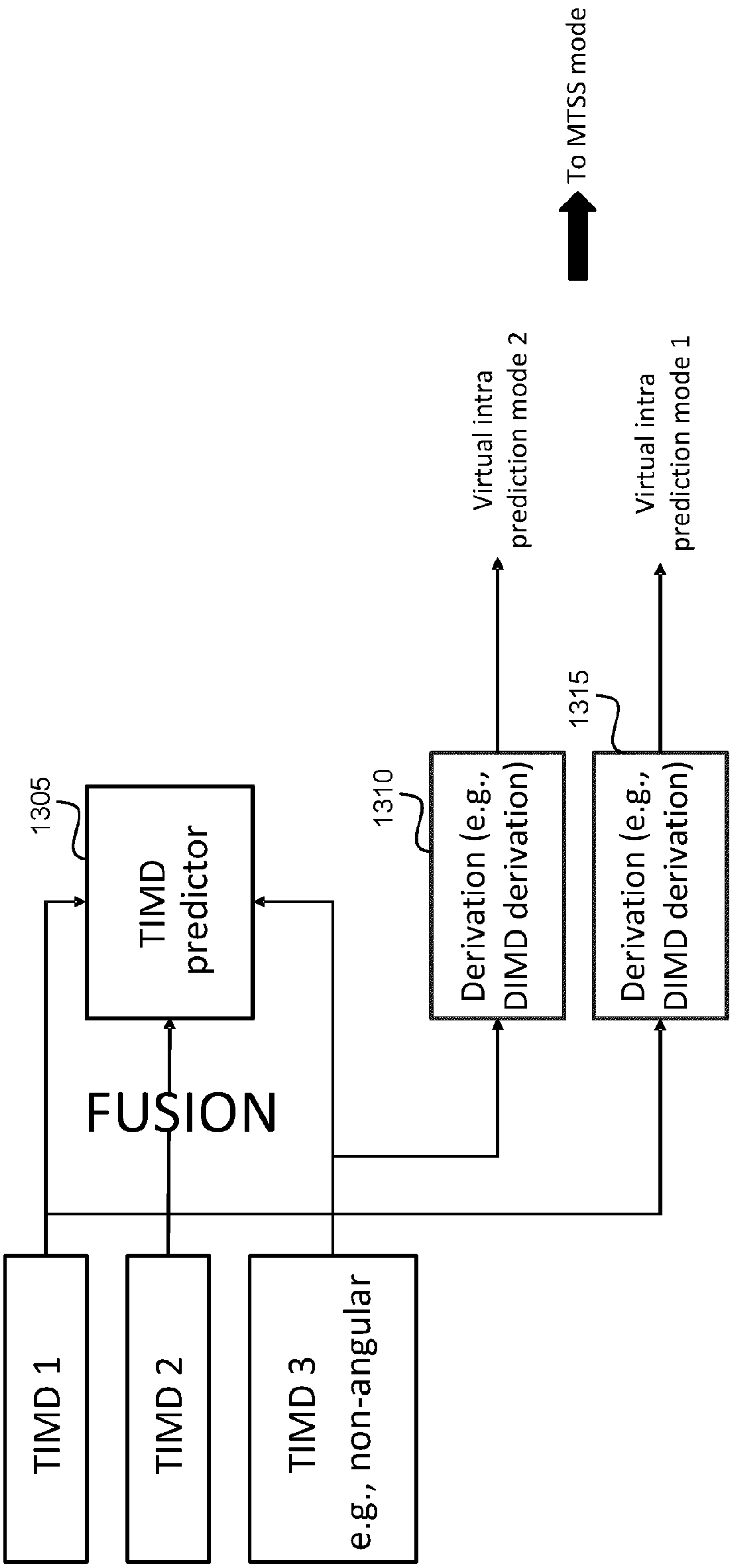
TIMD 1
TIMD 2
TIMD 3
e.g., non-angular
FUSION
TIMD predictor
1305
1310
Derivation (e.g., DIMD derivation)
1315
Derivation (e.g., DIMD derivation)
Virtual intra prediction mode 2
Virtual intra prediction mode 1
To MTSS mode

FIG. 13

Europäisches Patentamt
European Patent Office
Office européen des brevets

# EUROPEAN SEARCH REPORT

Application Number
EP 24 30 6079

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/137542 A1 (ZHAO XIN [US] ET AL) 25 April 2024 (2024-04-25)<br>* paragraphs [0079] - [0124] *<br>----- | 1-15 | INV.<br>H04N19/105<br>H04N19/11<br>H04N19/12<br>H04N19/14<br>H04N19/159<br>H04N19/176<br>H04N19/593 |
| X | WANG (OPPO) F ET AL: "EE2-4.1: Multiple Transform Set Selection for LFNST/NSPT",<br>34. JVET MEETING; 20240417 - 20240424; RENNES; (THE JOINT VIDEO EXPLORATION TEAM OF ISO/IEC JTC1/SC29/WG11 AND ITU-T SG.16 ),<br>,<br>no. JVET-AH0056<br>10 April 2024 (2024-04-10), XP030317251,<br>Retrieved from the Internet:<br>URL:https://jvet-experts.org/doc_end_user/documents/34_Rennes/wg11/JVET-AH0056-v1.zip JVET-AH0056-v1.docx<br>[retrieved on 2024-04-10]<br>* sections 1 and 2 *<br>----- | 1-15 | |
| X | ZHAO (BYTEDANCE) L ET AL: "EE2-4.1 related: Alternative intra mode derivation for LFNST/NSPT",<br>34. JVET MEETING; 20240417 - 20240424; RENNES; (THE JOINT VIDEO EXPLORATION TEAM OF ISO/IEC JTC1/SC29/WG11 AND ITU-T SG.16 ),<br>,<br>no. JVET-AH0218<br>11 April 2024 (2024-04-11), XP030317665,<br>Retrieved from the Internet:<br>URL:https://jvet-experts.org/doc_end_user/documents/34_Rennes/wg11/JVET-AH0218-v1.zip JVET-AH0218-v1.docx<br>[retrieved on 2024-04-11]<br>* sections 1 and 2 *<br>-----<br>-/-- | 1-15 | TECHNICAL FIELDS SEARCHED (IPC)<br>H04N |

The present search report has been drawn up for all claims

| Place of search | Date of completion of the search | Examiner |
|---|---|---|
| Berlin | 17 December 2024 | Santos Luque, Rocio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches Patentamt
European Patent Office
Office européen des brevets

# EUROPEAN SEARCH REPORT

Application Number
EP 24 30 6079

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG (OPPO) F ET AL: "Non-EE2: Multiple Transform Set Selection for LFNST/NSPT", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG0062 18 January 2024 (2024-01-18), XP030313881, Retrieved from the Internet: URL:https://jvet-experts.org/doc_end_user/documents/33_Teleconference/wg11/JVET-AG0062-v2.zip JVET-AG0062-v2-clean.docx [retrieved on 2024-01-18] * the whole document * ----- | 1-15 | |
| A | COBAN (QUALCOMM) M ET AL: "EE2-4.1 related: Alternative intra mode derivation for LFNST/NSPT kernel selection", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0237 ; m67372 12 April 2024 (2024-04-12), XP030317698, Retrieved from the Internet: URL:https://jvet-experts.org/doc_end_user/documents/34_Rennes/wg11/JVET-AH0237-v1.zip JVET-AH0237.docx [retrieved on 2024-04-12] * section 1 * ----- | 1-15 | TECHNICAL FIELDS SEARCHED (IPC) |

-/--

The present search report has been drawn up for all claims

| Place of search | Date of completion of the search | Examiner |
|---|---|---|
| Berlin | 17 December 2024 | Santos Luque, Rocio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 24 30 6079

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | J-Y HUO ET AL: "EE2-4.1: Modification of LFNST for MIP coded block", 28. JVET MEETING; 20221021 - 20221028; MAINZ; (THE JOINT VIDEO EXPLORATION TEAM OF ISO/IEC JTC1/SC29/WG11 AND ITU-T SG.16 ), , no. JVET-AB0067 ; m60796 14 October 2022 (2022-10-14), XP030304501, Retrieved from the Internet: URL:https://jvet-experts.org/doc_end_user/documents/28_Mainz/wg11/JVET-AB0067-v2.zip JVET-AB0067-v2.docx [retrieved on 2022-10-14] * section 2.1 * ----- | 6 | |

TECHNICAL FIELDS SEARCHED (IPC)

The present search report has been drawn up for all claims

| Place of search | Date of completion of the search | Examiner |
|---|---|---|
| Berlin | 17 December 2024 | Santos Luque, Rocio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

## ANNEX TO THE EUROPEAN SEARCH REPORT ON EUROPEAN PATENT APPLICATION NO.

EP 24 30 6079

This annex lists the patent family members relating to the patent documents cited in the above-mentioned European search report. The members are as contained in the European Patent Office EDP file on
The European Patent Office is in no way liable for these particulars which are merely given for the purpose of information.

17-12-2024

| Patent document cited in search report | Publication date | Patent family member(s) | Publication date |
|---|---|---|---|
| US 2024137542 A1 | 25-04-2024 | KR 20240065135 A | 14-05-2024 |
| | | US 2024137542 A1 | 25-04-2024 |
| | | WO 2024086725 A1 | 25-04-2024 |

EPO FORM P0459

For more details about this annex : see Official Journal of the European Patent Office, No. 12/82